# EUROPEAN PATENT SPECIFICATION

(11) **EP 4 252 132 B1**
(45) Date of publication and mention of the grant of the patent: **19.02.2025**
(21) Application number: 21802076.6
(22) Date of filing: 06.10.2021
(51) Int. Cl.: H04L 9/40, G06F 21/62, G06F 21/57, G06F 21/31

(54) **INTEGRATED CIRCUIT FOR OBTAINING ENHANCED PRIVILEGES FOR A NETWORK-BASED RESOURCE AND PERFORMING ACTIONS IN ACCORDANCE THEREWITH**
INTEGRIERTE SCHALTUNG ZUM ERHALTEN ERWEITERTER PRIVILEGIEN FÜR EINE NETZWERKBASIERTE RESSOURCE UND ZUR DURCHFÜHRUNG VON AKTIONEN GEMÄSS DIESER
CIRCUIT INTÉGRÉ POUR OBTENIR DES PRIVILÈGES AMÉLIORÉS POUR UNE RESSOURCE BASÉE SUR LE RÉSEAU ET EFFECTUER DES ACTIONS EN FONCTION DE CEUX-CI

(30) Priority: 25.11.2020 US 202017104311
(43) Date of publication of application: 04.10.2023
(73) Proprietor: Microsoft Technology Licensing, LLC, Redmond, Washington 98052 (US)
(72) Inventor: SROUR, Orr, Redmond, Washington 98052-6399 (US); LIVNY, Yotam, Redmond, Washington 98052-6399 (US)
(74) Representative: Murgitroyd & Company
(86) International application number: PCT/US2021/053679
(87) International publication number: WO 2022/115162

(56) References cited:
- US-A1- 2016 012 242
- FERREIRA A ET AL: "How to Securely Break into RBAC: The BTG-RBAC Model", COMPUTER SECURITY APPLICATIONS CONFERENCE, 2009. ACSAC '09. ANNUAL, IEEE, PISCATAWAY, NJ, USA, 7 December 2009 (2009-12-07), pages 23 - 31, XP031610116, ISBN: 978-0-7695-3919-5
- ACHIM D BRUCKER ET AL: "Extending access control models with break-glass", SACMAT '09, ACM, STRESA, ITALY, 3 June 2009 (2009-06-03), pages 197 - 206, XP058344996, ISBN: 978-1-60558-537-6, DOI: 10.1145/1542207.1542239

## Description

### BACKGROUND

The term "break glass" refers to a quick means for a person who does not have access privileges to certain information to gain access when necessary, for example, during an emergency. Generally, break glass techniques are implemented using pre-staged emergency user accounts. This solution can be used with a broad range of existing systems and architectures that require operators to login, for example, using a username and password designated for break glass access, before access is granted.

Reference is made to FERREIRA A ET AL: "How to Securely Break into RBAC: The BTG-RBAC Model", COMPUTER SECURITY APPLICATIONS CONFERENCE, 2009. ACSAC '09. ANNUAL, IEEE, PISCATAWAY, NJ, USA, 7 December 2009, pages 23-31, XP03161 0116, ISBN: 978-0-7695-3919-5 which provides an arrangement that allows a user to exceptionally access a resource not normally accessible to that user for example in an emergency situation, the method described is performed by different entities namely the application service and the BTG-RBAC. The application service external to the user device interacts with an authentication service and the access control, BTG-RBAC, for elevating user credentials in case the user is not authorised to access a certain resource. Reference is made also to ACHIM D BRUCKER ET AL: "Extending access control models with break-glass", SACMAT '09, ACM, STRESA, ITALY, 3 June 2009, pages 197-206, XP058344996, DOI: 10.1145/1542207.1542239 ISBN: 978-1-60558-537-6; and to US 2016/012242 A1

### SUMMARY

The scope is in accordance with the appended claims.

Accordingly, a first aspect of the present teaching provides a method implemented by an integrated circuit of a computing device, comprising: validating a first request for elevated user privileges with respect to a network- based resource, the first request received from a central processing unit communicatively coupled to the integrated circuit; providing a second request for the elevated privileges to a network-based service; receiving a response from the network-based service, the response indicating that the second request for elevated credentials is granted; responsive to receiving the response, retrieving a private key stored in a memory communicatively coupled to the integrated circuit; digitally signing a third request, to access the network-based resource in accordance with the elevated privileges, using the retrieved private key; and providing the digitally-signed request to the network-based service to access the network-based resource. Preferably, said validating comprises: requesting a user to provide credentials; validating the provided credentials; and responsive to validating the provided credentials, validating the first request.

Preferably, the credentials comprise at least one of: biometric information; environmental information; a passcode; a username; or a password.

Preferably, the second request comprises at least one of: an identifier of the computing device; the provided credentials; an identifier of the network-based resource; voltage characteristics of the computing device; temperature characteristics of the computing device; or a location of the computing device

Preferably, said validating comprises: determining a location in which the computing device is located; determining at least one of voltage characteristics or temperature characteristics associated with the computing device; determining that the location is one from a plurality of predetermined locations; determining that at least one of: the voltage characteristics are below a predetermined threshold, or the temperature characteristics are below a predetermined threshold; and responsive to determining that the location is one from the plurality of predetermined locations and determining that at least one of the voltage characteristics are below a predetermined threshold or the temperature characteristics are below a predetermined threshold, validating the first request.

Preferably, the integrated circuit comprises a configuration register that maintains a number of first requests received from the central processing unit.

Preferably, said validating further comprises: determining whether the number of first requests has a predetermined relationship with a predetermined threshold; in response to determining that the number of first requests has the predetermined relationship with the predetermined threshold, validating the first request; and in response to determining that the number of first requests does not have the predetermined relationship with the predetermined threshold, denying the first request.

According to a second aspect of the present teaching, there is provided a computing device comprising: at least one processor circuit; an integrated circuit communicatively coupled to the at least one processor circuit; and a memory communicatively coupled to the integrated circuit that stores a private key, the integrated circuit configured to: validate a first request for elevated user privileges with respect to a network-based resource, the first request received from the at least one processor circuit; provide a second request for the elevated privileges to a network-based service; receive a response from the network-based service, the response indicating that the second request for elevated credentials is granted; responsive to receiving the response, retrieve the private key from the memory; digitally sign a third request, to access the network-based resource in accordance with the elevated privileges, using the retrieved private key; and provide the digitally-signed request to the network-based service to access the network-based resource. Preferably, the integrated circuit is further configured to: request a user to provide credentials; validate the provided credentials; and responsive to validating the provided credentials, validate the first request.

Preferably, the credentials comprise at least one of: biometric information; environmental information; a passcode; a username; or a password.

Preferably, the second request comprises at least one of: an identifier of the computing device; the provided credentials; an identifier of the network-based resource; voltage characteristics of the computing device; temperature characteristics of the computing device; or a location of the computing device

Preferably, the integrated circuit is further configured to: determine a location in which the computing device is located; determine at least one of voltage characteristics or temperature characteristics associated with the computing device; determine that the location is one from a plurality of predetermined locations; determine that at least one of the voltage characteristics or temperature characteristics are below a predetermined threshold; and responsive to a determination that the location is one from the plurality of predetermined locations and a determination that at least one of the voltage characteristics or temperature characteristics are below a predetermined threshold, validate the first request.

Preferably, the integrated circuit comprises a configuration register that maintains a number of first requests received from the central processing unit.

Preferably, the integrated circuit is further configured to: determine whether the number of first requests has a predetermined relationship with a predetermined threshold; in response to a determination that the number of first requests has the predetermined relationship with the predetermined threshold, validate the first request; and in response to a determination that the number of first requests does not have the predetermined relationship with the predetermined threshold, deny the first request.

According to a third aspect of the present teaching, there is provided a method implemented by an integrated circuit of a computing device, comprising: validating a first request for elevated user privileges with respect to a network- based resource, the first request received from a central processing unit communicatively coupled to the integrated circuit; providing a second request for the elevated privileges to a network-based service; receiving a response from the network-based service, the response indicating that the second request for elevated credentials is granted and comprising a private key; digitally signing a third request, to access the network-based resource in accordance with the elevated privileges, using the private key; and providing the digitally-signed request to the network-based service to access the network-based resource.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Methods, systems, and apparatuses are disclosed directed to an integrated circuit for obtaining elevated credentials and performing actions with respect to a network- based resource in accordance with the elevated credentials. For instance, in certain situations (e.g., in an emergency), a user may be required to access a resource that the user is normally not to able to access. In such a scenario, a user, using their client device, may request their privileges with respect to that resource to be elevated, for example, using an application utilized to access the resource. Responsive to submitting the request, the client device's main central processing unit (CPU) may send a request to a specialized integrated circuit included in the client device. The specialized integrated circuit performs one or more forms of validation to determine whether the user making the request is authorized to do so, to determine whether the computing device has been tampered with, etc. If validation is successful, the specialized integrated circuit sends a request for elevated privileges to a network-based service, which determines whether or not the user is authorized to obtain elevated credentials. If the network-based service determines that the user is authorized to obtain elevated credentials, the network-based service provides a response granting the elevated credentials. Responsive to receiving the response, the specialized integrated circuit is given access to credentials for performing the action. The credentials may comprise a private key the circuit utilizes to digitally sign an action request to perform the desired action in accordance with the elevated privileges. The private key may be received via the response sent by the network-based service. Alternatively, the private key may be stored in a memory maintained by the specialized integrated circuit, which is made available to the circuit upon receiving the response from the network-based service. In the latter scenario, the specialized integrated circuit acts as a vault for the private key that is unlocked upon receiving the response from the network-based service. After digitally signing the action request, the specialized integrated circuit provides the signed request to the network-based service, which verifies the identity of the originator of the action request. Upon successful verification, the network-based service performs the desired action with respect to the resource in accordance with the elevated privileges.

Further features and advantages of the disclosed embodiments, as well as the structure and operation of various embodiments, are described in detail below with reference to the accompanying drawings. It is noted that the disclosed embodiments are not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRAWINGS

The accompanying drawings, which are incorporated herein and form a part of the specification, illustrate embodiments and, together with the description, further serve to explain the principles of the embodiments and to enable a person skilled in the pertinent art to make and use the embodiments.
FIG. 1 depicts a block diagram of a system for obtaining elevated privileges for access to a resource in accordance with an example embodiment.
FIG. 2 depicts a block diagram of a system for obtaining elevated privileges for access to a resource in accordance in accordance with another example embodiment.
FIG. 3 depicts a flowchart of a method performed by an integrated circuit of a computing device for obtaining elevated credentials based on a private key maintained by the integrated circuit in accordance with an example embodiment.
FIG. 4 depicts a flowchart of a method for validating a request for elevated privileges in accordance with an example embodiment.
FIG. 5 depicts a flowchart of a method for validating a request for elevated privileges in accordance with another example embodiment.
FIG. 6 depicts a flowchart of a method for validating a request for elevated privileges in accordance with a further example embodiment.
FIG. 7 depicts a block diagram of a system for obtaining elevated privileges for emergency access to a resource based on a private key received from a network-based service in accordance with an example embodiment.
FIG. 8 depicts a flowchart of a method performed by an integrated circuit of a computing device for obtaining elevated credentials based on a private key obtained from a network-based service in accordance with an example embodiment.
FIG. 9 is a block diagram of an exemplary user device in which embodiments may be implemented.
FIG. 10 is a block diagram of an example computing device that may be used to implement embodiments.

The features and advantages of the disclosed embodiments will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

### I. Introduction

The following detailed description discloses numerous example embodiments.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

Numerous exemplary embodiments are described as follows. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

### II. System and Method for Obtaining Elevated Privileges for Access to a Resource

Embodiments described herein are directed to an integrated circuit for obtaining elevated credentials and performing actions with respect to a network-based resource in accordance with the elevated credentials. For instance, in certain situations (e.g., in an emergency), a user may be required to access a resource that the user is normally not to able to access. In such a scenario, a user, using his client device, may request his privileges with respect to that resource to be elevated, for example, using an application utilized to access the resource. Responsive to submitting the request, the client device's main central processing unit (CPU) may send a request to a specialized integrated circuit included in the client device. The specialized integrated circuit performs various forms of validation to determine whether the user making the request is authorized to do so, to determine whether the computing device has been tampered with, etc. If validation is successful, the specialized integrated circuit sends a request for elevated privileges to a network-based service, which determines whether or not the user is authorized to obtain elevated credentials. If the network-based service determines that the user is authorized to obtain elevated credentials, the network-based service provides a response granting the elevated credentials. Responsive to receiving the response, the specialized integrated circuit is given access to credentials for performing the action. The credentials may comprise private key that the circuit utilizes to digitally sign an action request to perform the desired action in accordance with the elevated privileges. The private key may be received via the response sent by the network-based service. Alternatively, the private key may be stored in a memory maintained by the specialized integrated circuit, which is made available to the circuit upon receiving the response from the network-based service. In the latter scenario, the specialized integrated circuit acts as a vault for the private key that is unlocked upon receiving the response from the network-based service. After digitally signing the action request, the specialized integrated circuit provides the signed request to the network-based service, which verifies the identity of the originator of the action request. Upon successful verification, the network-based service performs the desired action with respect to the resource in accordance with the elevated privileges.

The techniques described herein improve the strength in security for computing systems. For instance, as described herein, the credentials (e.g., the private key) may be stored in a secure, access-restricted memory, and the specialized integrated circuit is protected with various anti-tamper techniques. Such techniques advantageously prevent the credentials from being hacked (i.e., unauthorized access to the credentials is prevented) and prevent unauthorized elevated privilege requests for enabling a user to perform break glass operations. Not only is the device on which the credentials are stored protected, but also the resources accessible via the credentials stored on other computing devices.

Moreover, the anti-tamper techniques implemented by the specialized integrated circuit occur before elevated privilege requests are transmitted to the network-based service. Any privilege request that is deemed to be unauthorized is not transmitted to the network-based resource, thereby conserving network bandwidth.

The techniques described herein provide several advantages over conventional techniques. For instance, conventional techniques require significant administrative overhead. In particular, a user may be required to use a computing device that is intended for break glass-usage only, which requires significant software-based security measures to be implemented, for example, by an administrator. The functionality of such a device is heavily restricted, and therefore, does not make such a device ideal for performing other work-related tasks. This requires the user to utilize multiple computing devices, one to perform typical work-related tasks, and another specifically configured to perform break glass operations.

As described herein, the specialized integrated circuit is communicatively coupled to the client device's main CPU and is utilized when performing certain actions, such as break glass operations to perform an action with respect to a user in an emergency situation. Such a solution advantageously enables a user to maintain a single device for both typical work usage and for break glass operations, as opposed to conventional techniques that require the usage of a separate computing device specifically configured for break glass operations.

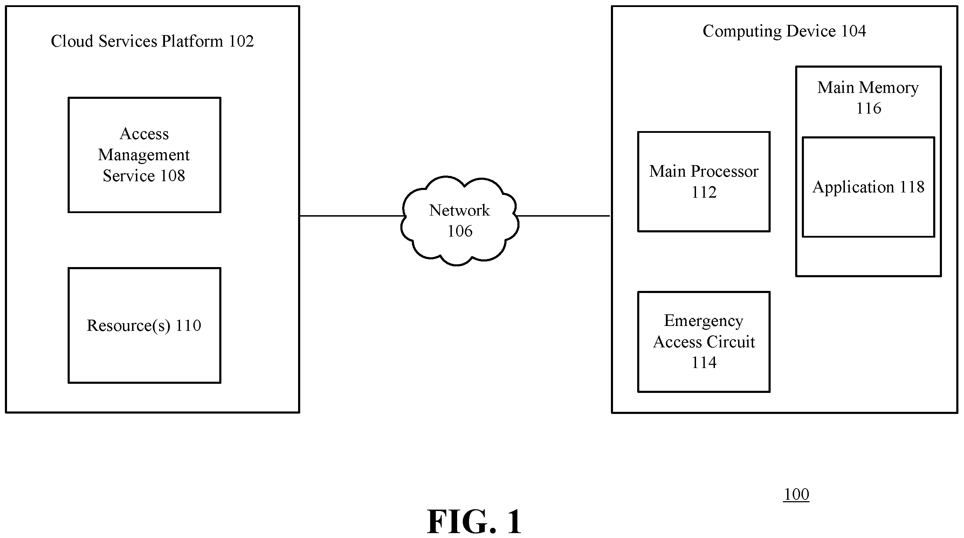

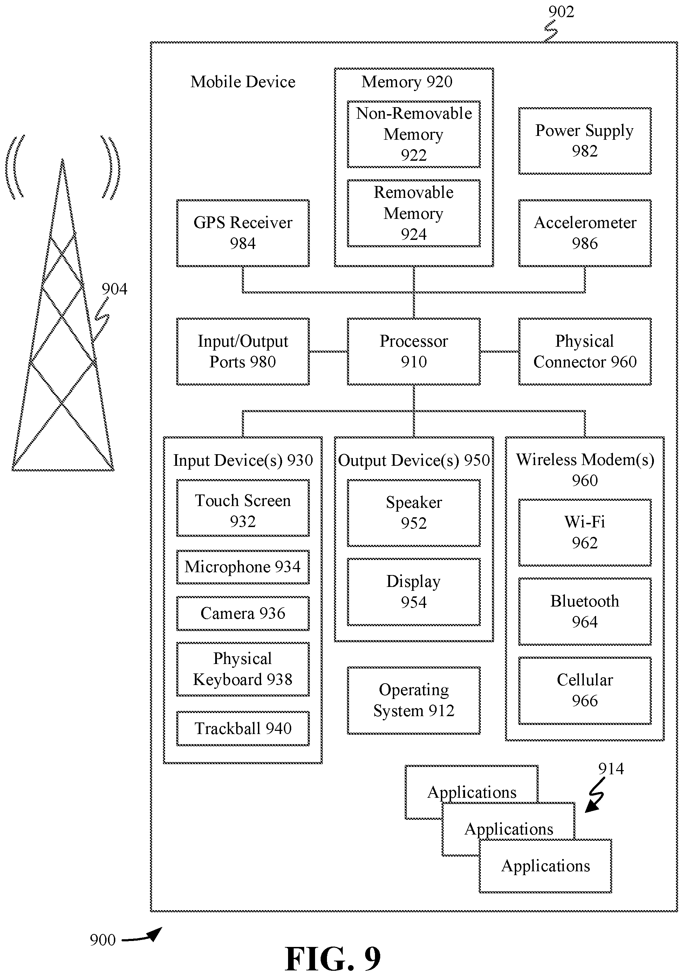

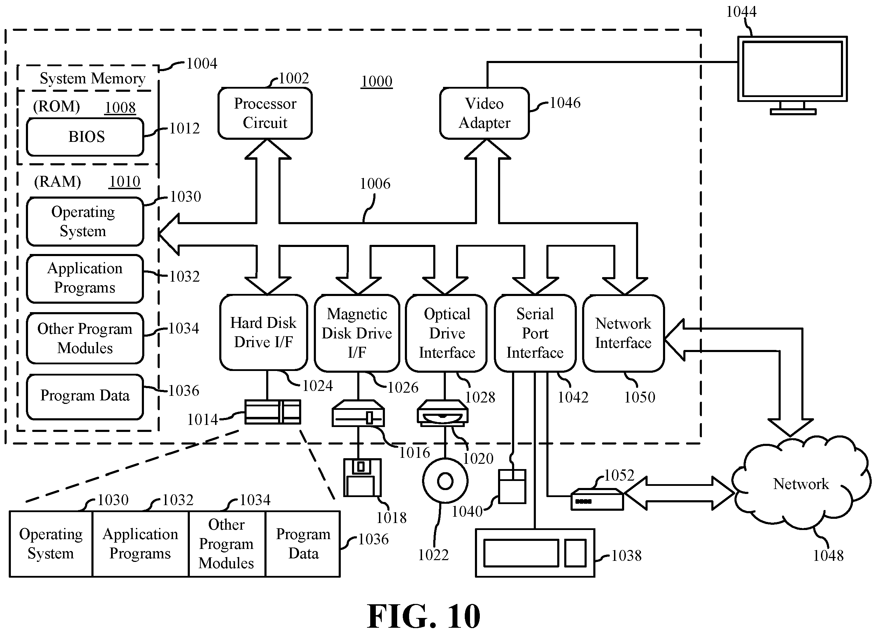

For instance, FIG. 1 depicts a block diagram of a system 100 for obtaining elevated privileges for access to a resource in accordance with an example embodiment. As shown in FIG. 1, system 100 includes a cloud services platform 102 and a computing device 104 that are communicatively coupled via a network 106. Network 106 may comprise one or more networks such as local area networks (LANs), wide area networks (WANs), enterprise networks, the Internet, etc., and may include one or more of wired and/or wireless portions. Computing device 104 may comprise, for example and without limitation, a desktop computer, a laptop computer, a server, a tablet computer, a netbook, a smartphone, or the like. Additional examples of computing device 104 are described below with reference to FIGS. 9 and 10.

In accordance with at least one embodiment, cloud services platform 102 comprises part of the Microsoft^{®} Azure^{®} cloud computing platform, owned by Microsoft Corporation of Redmond, Washington, although this is only an example and not intended to be limiting. Cloud services platform 102 may include one or more of any commercially available cloud computing platform and/or any other network-based server and storage system. As shown in FIG. 1, cloud services platform 102 comprises a management service 108 and one or more resources 110. Access management service 108 is configured to grant or deny requests for elevated privileges to a user. The elevated privileges grant the user the authorization to manage resource(s) 110 that they are normally not allowed to manage and/or perform an action with respect to resource(s) 110 that they are normally not authorized to perform. Examples of resource(s) 110 include a user or storage account, a directory, a file, a virtual machine, a database, a cloud-based subscription, etc.

Computing device 104 comprises at least a main processor 112 and an emergency access circuit 114 that is communicatively coupled to main processor 112. Computing device 104 further comprises a main memory 116. Processor 112 is an electrical and/or optical circuit implemented in one or more physical hardware electrical circuit device elements and/or integrated circuit devices (semiconductor material chips or dies) as a central processing unit (CPU), a microcontroller, a microprocessor, and/or other physical hardware processor circuit. Processor 112 may execute program code (e.g., application 118) stored in a computer readable medium (e.g., main memory 116), such as program code of an operating system installed on computing device 104 or application programs (e.g., application 118) installed on computing device 104. Examples of main memory 116 include a random access memory (RAM) (e.g., dynamic RAM (DRAM), synchronous DRAM (SDRAM), dual-data rate RAM (DDRRAM), etc.).

Emergency access circuit 114 is an electrical and/or optical circuit implemented in one or more physical hardware electrical circuit device elements and/or integrated circuit devices (semiconductor material chips or dies) as a microcontroller, a custom, specialized or application-specific integrated circuit (ASIC), a field programmable gate array (FPGA) device, and/or the like. Emergency access circuit 114 is a separate circuit than processor circuit 112 and is not integrated with main processor 112. Each of processor 112 and emergency access circuit 114 may be attached to the same motherboard included in computing device 104. However, the embodiments described herein are not so limited. For instance, emergency access circuit 114 may be attached to a daughterboard that is communicatively coupled to the motherboard.

In certain embodiments, emergency access circuit 114 may be implemented as an emergency access unit that is implemented via software (e.g., comprising logic or program code) in a security coprocessor (e.g., a secured enclave) that is communicatively coupled to main processor 112.

As shown in FIG. 1, main memory 116 stores an application 118, which is executable by main processor 112. Application 118 may be any software application that enables a user to access, manage, and/or utilize resource(s) 110 in accordance with permissions or privileges (e.g., create, read, update, and/or delete (CRUD) permissions) assigned thereto. Examples of application 118, include, but are not limited to, a portal application that enables the user to access, manage, and/or utilize a user account, a storage account and/or a cloud-based subscription, a database application, a file storage application, etc. In certain circumstances, such as in an emergency, a user may require that their privileges be elevated. The elevated privileges grant the user the authorization to access, manage, and/or utilize resource(s) 110 that they are normally not allowed to access, manage, and/or utilize and/or perform an action with respect to resource(s) 110 that they are normally not authorized to perform. Examples of such actions include, but are not limited to, accessing a root (or admin) account of an operating system or database system, accessing a file that is normally only accessible by an admin, accessing a user account, a storage account, and/or a cloud-based subscription of another user (e.g., an admin), restarting a resource of resource(s) 110 (e.g., a virtual machine), etc.

To request elevated privileges, the user may initiate a request for such privileges using application 118, for example, using one or more user interface elements (e.g., graphical user interface (GUI) elements that enable the user to request elevated privileges). Upon initiating the request, main processor 112 may execute code of application 118 that causes main processor 112 to send a request for elevated privileges to emergency access circuit 114.

Emergency access circuit 114 is configured to verify whether the request originated from a valid user. For instance, emergency access circuit 114 may cause a prompt to be provided to the user that solicits credentials from the user. Emergency access circuit 114 verifies whether the credentials provided by the user are correct. In response to determining that the credentials are correct, emergency access circuit 114 provides a request for elevated privileges to access management service 108. It is noted that emergency access circuit 114 may initiate credential verification independent from receiving a request from main processor 112. For example, emergency access circuit 114 may periodically perform credential verification and provide a request for elevated privileges upon receiving the request from main processor 112 (assuming the verification is successful). Access management service 108 determines whether the user requesting elevated privileges is authorized to request such privileges. In response to determining that the user requesting elevated privileges is authorized to do so, access management service 108 may send a response to emergency access circuit 114 indicating that the user is authorized to request elevated privileges. In response to receiving the response, emergency access circuit 114 obtains credentials. The credentials may comprise a private key, which emergency access circuit 114 utilizes to a sign an action request for performing an action with respect to resource(s) 110 in accordance with the elevated privileges. In accordance with an embodiment, the credentials may be provided by access management service 108. In accordance with another embodiment, the credentials may be stored in a memory accessible only to emergency access circuit 114. In accordance with a further embodiment, the credentials may be stored in the memory in an encrypted fashion and retrieved and decrypted based on a key received from access management service 108. The action request may be provided to access management service 108, which performs the desired action with respect to the resource of resource(s) 110 specified by the action request.

In response to emergency access circuit 114 determining that the credentials provided by the user are incorrect and/or in response to access management service 108 determining that the user requesting elevated privileges is not authorized to do so, the request for elevated privileges is denied, and the user is not enabled to perform an action (e.g., an emergency or break glass action) with respect to a resource of resource(s) 110.

It is noted that access management service 108 and resource(s) 110 may be included on a same computing device (a node, a server, a virtual machine, etc.) of cloud services platform 102, or alternatively, access management service 108 and resource(s) 110 may be included on different computing devices of cloud services platform 102. Still further, resource(s) 110 may be included on a computing device not included as part of cloud services platform 102. Moreover, resource(s) 110 may be maintained by a third-party that is different than the cloud services provider providing cloud services platform 102.

It is further noted that while the present disclosure describes embodiments related to protecting credentials, the embodiments described herein are not so limited. For instance, any type of information (e.g., confidential information) may be protected e.g., by storing such information in the memory of emergency access circuit 114.

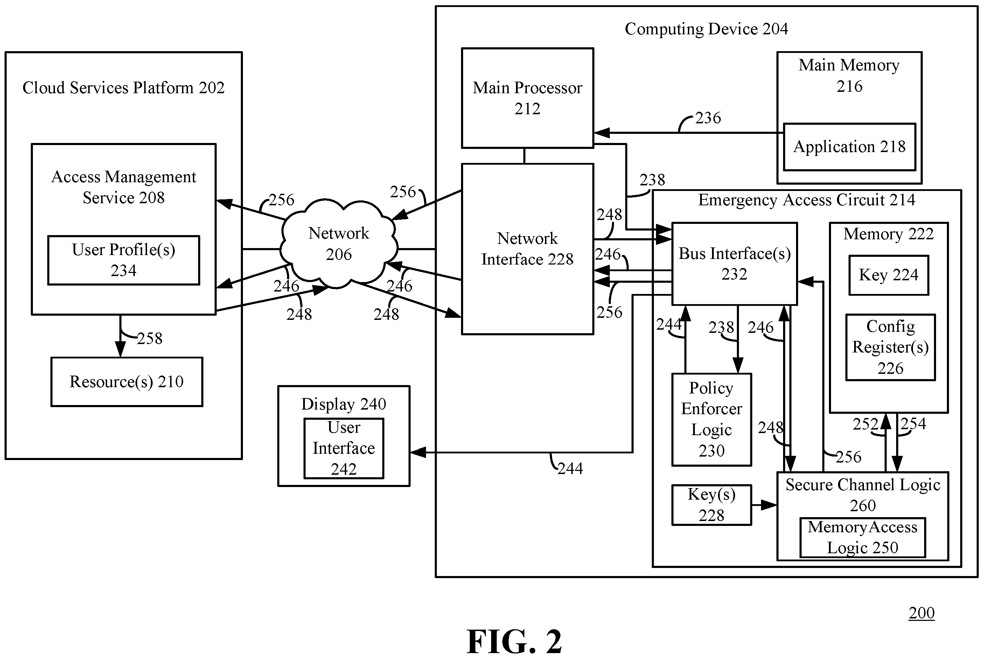

FIG. 2 depicts a block diagram of a system 200 for obtaining elevated privileges for access to a resource in accordance in accordance with another example embodiment. As shown in FIG. 1, system 200 includes a cloud services platform 202 and a computing device 204 that are communicatively coupled via a network 206. Cloud services platform 202, computing device 204, and network 206 are examples of cloud services platform 102, computing device 104, and network 106, as respectively described above with reference to FIG. 1

As shown in FIG. 2, cloud services platform 202 comprises an access management service 208 and one or more resources 210, which are examples of access management service 108 and resource(s) 110, as respectively described above with reference to FIG. 1.

Computing device 204 comprises at least a main processor 212 and an emergency access circuit 214 that is communicatively coupled to main processor 212. Computing device 204 further comprises a main memory 216. Processor 212, emergency access circuit 214, and main memory 216 are examples of processor 112, emergency access circuit 114, and main memory 116, as respectively described above with reference to FIG. 1. As further shown in FIG. 2, computing device 204 is communicatively coupled to a display 240, which may be integrated with computing device 204 (e.g., display 240 may be a display screen, a touch screen, etc.). Although, the embodiments described herein are not so limited. For instance, display 240 may an external device (e.g., a monitor, a television, a projector, etc.) that is coupled to computing device 204. Computing device 204 further comprises a network interface 228. Network interface 228 may interface with remote sites (e.g., cloud services platform 220) and/or networks (e.g., network 206) via wired or wireless connections. Examples of network interface 228 include but are not limited to a modem, a network interface card (e.g., an Ethernet card), a communication port, a Personal Computer Memory Card International Association (PCMCIA) card, etc.

Emergency access circuit 214 comprises one or more bus interfaces 232, policy enforcer logic 230, secure channel logic 260, and one or more keys 228. As shown in FIG. 2, emergency access circuit 214 may further comprise a memory 222, although the embodiments described herein are not so limited. For instance, memory 222 may be external to emergency access circuit 214. Bus interface(s) 232 may comprise a plurality of different bus interfaces, each suitable for communication and data transmission between emergency access circuit 214 and one or more other components, such as, but not limited to network interface 228, main processor 212, main memory 216, and/or memory 222. Examples of bus interface(s) 232 configured to communicate with main processor 212, main memory 216, network interface 228 and/or memory 222 include, but are not limited to a serial peripheral interface (SPI), an Octal SPI (OSPI) interface, a Quad SPI (QSPI) interface, a Peripheral Component Interconnect (PCI)-based interface (e.g., PCI-X, PCIe, etc.), a Low Pin Count (LPC) interface, an Inter-Integrated Circuit (I2C) interface, a Universal Asynchronous Receiver/Transmitter (UART) interface, and/or any other bus suitable for transmitting and receiving data between emergency access circuit 214 and main processor 212, main memory 216, network interface 228 and/or memory 222.

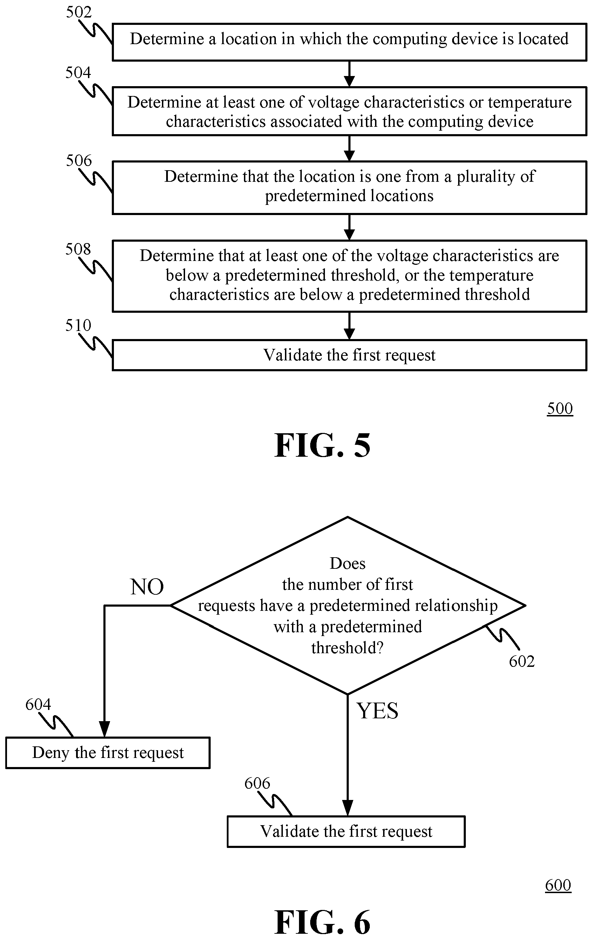

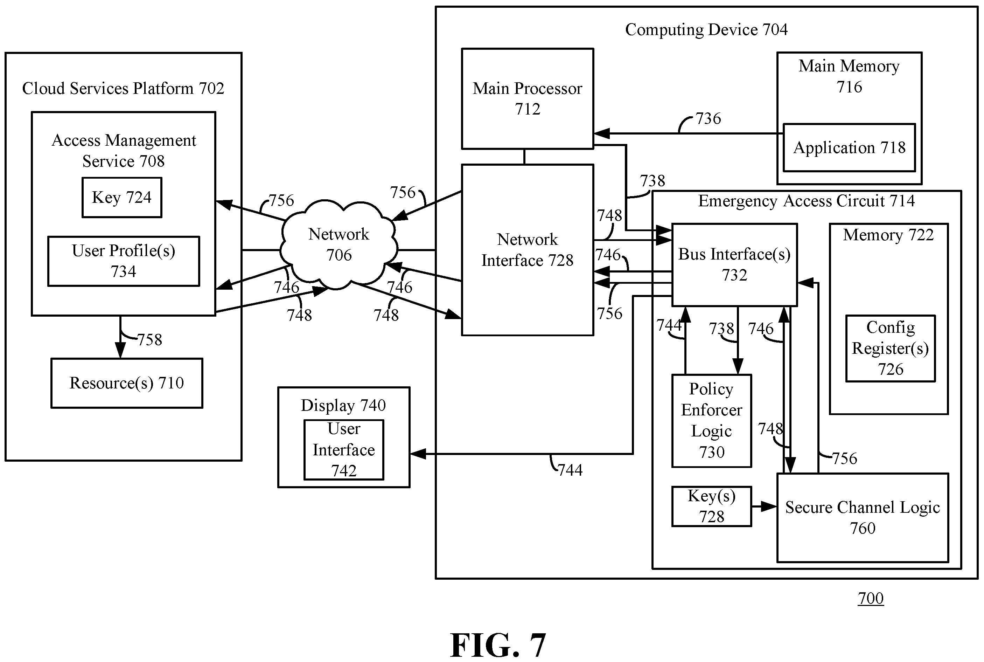

Key 224 may comprise a private key that is uniquely associated with emergency access circuit 214 and that is stored in memory 222. However, the embodiments described herein are not so limited. For example, as will be described below with reference to FIGS. 6 and 7, key 224 may be obtained from access management service 208. Emergency access circuit 214 utilizes key 224 to a sign an action request for performing an action with respect to resource(s) 210 in accordance with elevated privileges. Key 224 becomes accessible by emergency access circuit 214 only when a user's request for elevated privileges is granted, for example, by access management service 208.

Emergency access circuit 214 may be protected with various anti-tamper techniques to prevent unauthorized access to key 224. For example, emergency access circuit 214 may use any number of and/or a combination of anti-tamper techniques. Examples of anti-tamper techniques include, but are not limited to fully-enclosed encapsulation or coating techniques, where emergency access circuit 214 is fully encapsulated with filled epoxy (or a similar substance) or coated with acrylic, epoxy, or silicone-based substances, the usage of security fuses with respect memory 222, which prevent the unauthorized access of data stored in memory 222, layout and data bus scrambling, etc.

Memory 222 may be further protected such that is it only accessible by emergency access circuit 214 (and not main processor 212 or any other entity communicatively coupled to computing device 204) under certain conditions (e.g., only when a user's request for elevated privileges is granted). Key 224 may be written to memory 222 using fuses (or anti-fuses), using flash techniques, using certain write ports, which are then subsequently destroyed or deactivated, and/or the like. Memory 222 is a non-volatile memory. Examples of memory 222, include, but are not limited to, a programmable read-only memory (PROM), an erasable PROM (EPROM), an electrically erasable PROM (EEPROM), flash memory, and/or the like.

Key(s) 228 comprises one or more private and/or public keys that are used for authentication of requests, responses, and other types of transmissions between emergency access circuit 214 and access management service 208. Key(s) 228 may be stored via one or more fuses of emergency access circuit 214 or in a memory (other than memory 222) maintained by emergency access circuit 214. Such a memory is not shown for brevity. Key(s) 228 and key 224 may be stored in emergency access circuit 214 at the time of provisioning (e.g., manufacturing) of computing device 204. Key(s) 228 and/or key 224 may be generated in accordance with any technique known in the art, including, but not limited to, a Rivest-Shamir-Adleman (RSA) encryption-based techniques, ElGamal encryption-based techniques, Digital Signature Standard (DSS) encryption-based techniques, etc.

As described above, in certain circumstances, such as in an emergency, a user may request that his privileges be elevated. The elevated privileges grant the user the authorization to access, manage, and/or utilize resource(s) 210 that they are normally not allowed to access, manage, and/or utilize and/or perform an action (e.g., a break glass operation) with respect to resource(s) 210 that they are normally not authorized to perform. Examples of such actions include, but are not limited to, accessing a root (or admin) account of an operating system or database system, accessing a file that is normally only accessible by an admin, accessing a user account, a storage account, and/or a cloud-based subscription of another user (e.g., an admin), restarting a resource of resource(s) 210 (e.g., a virtual machine), etc.

To request elevated privileges, the user may initiate a request for such privileges using application 218, for example, using one or more user interface (e.g., a graphical user interface (GUI) elements of user interface 242 that enable the user to request elevated privileges). Upon initiating the request, main processor 212 may execute code 236 of application 218 that causes main processor 212 to send a request 238 for elevated privileges to emergency access circuit 214. Request 238 is received via bus interface(s) 232. Bus interface(s) 232 provides request 238 to policy enforcer logic 230.

Policy enforcer logic 230 of emergency access circuit 114 is configured to verify whether request 238 originated from an authorized user. For instance, responsive to receiving request 238, emergency access circuit 214 may cause a prompt 244 to be provided to display 240 via bus interface(s) 232. In accordance with an embodiment, prompt 244 is provided directly from emergency access circuit 214 to display 240 (e.g., via bus interface(s) 232). In accordance with another embodiment, emergency access circuit 214 provides prompt 244 to main processor 212 (e.g., via bus interface(s) 232), and main processor 212 causes prompt 244 to be displayed via user interface 242.

Prompt 244 may solicit certain credentials from the user. Examples of such credentials include, but are not limited to, a passphrase, a security code or personal identification number (PIN), a username and/or password, biometric data or information (e.g., a fingerprint, facial detection, blood characteristic detection (e.g., based on blood flow patterns), etc.), environmental information (e.g., based on measurements of motion, temperature, lighting, temperature, etc. of the room in which computing device 204 is located), etc. Upon receiving such credentials, policy enforcer logic 230 verifies whether the credentials are correct. For example, a memory (e.g., other than memory 222) of emergency access circuit 214 may store credentials for the user. Policy enforcer logic 230 compares the received credentials to the credentials stored in the memory. If the credentials match, policy enforcer logic 230 determines that an authorized user requested the elevated privileges. If the credentials do not match, policy enforcer logic 230 determines that an unauthorized user requested the elevated privileges.

Policy enforcer logic 230 may also determine a location in which computing device 204 is located and/or a network (e.g., a cellular network, a LAN, a WAN, an enterprise network etc.) to which computing device 204 is connected. Policy enforcer logic 230 may query other components of computing device 204 (e.g., a global position system (GPS) module, an operating system, network interface 228, etc.) to determine the location and/or network. Upon determining the location and/or network, policy enforcer logic 230 verifies whether the determined location and/or network are from a predetermined list of locations and/or networks. For example, a memory of emergency access circuit 214 may store the predetermined list of locations and/or networks for the user. The predetermined list may be configurable and stored (e.g., by an admin or the user of computing device 204) in a memory (other than memory 222) included in emergency access circuit 214 and/or main memory 216. Policy enforcer logic 230 compares the determined location and/or network to the predetermined list of locations and/or networks stored in the memory. If the determined location and/or network are included in the predetermined list of locations and/or networks, policy enforcer logic 230 determines that computing device 204 is in a location and/or connected to a network in which requests for elevated privileges are authorized. If the determined location and/or network are not included in the predetermined list of locations and/or networks, policy enforcer logic 230 determines that computing device 204 is in a location and/or connected to a network in which requests for elevated privileges are not authorized. Such techniques advantageously ensure that computing device 204 is in a location or connected to a network that has been designated as being safe or secure (e.g., an environment that is not prone to malicious attacks) before authorizing requests to elevated privileges. This greatly reduces the chances of a malicious entity intercepting communications between computing device 204 and access management service 208.

Policy enforcer logic 230 may also determine certain hardware-related characteristics associated with emergency access circuit 214 and/or computing device 204 and determine whether such characteristics have a predetermined relationship with a predetermined threshold. For instance, policy enforcer logic 230 may determine voltage characteristics, temperature characteristics, resistance characteristics, etc., associated with emergency access circuit 214 and/or computing device 204. Policy enforcer logic 230 may query other components of computing device 204 (e.g., one or more temperature sensors, resistance sensors, current sensors, voltage sensors, etc.) to determine such hardware-based characteristics. Upon determining such hardware-based characteristics, policy enforcer logic 230 verifies whether such hardware-based characteristics exceed a predetermined threshold for each of such hardware-based characteristics. For example, a memory (other than memory 222) of emergency access circuit 214 may store the predetermined thresholds. Policy enforcer logic 230 compares each of the determined hardware-based characteristics to its associated predetermined threshold. If the determined hardware-based characteristics do not exceed the predetermined threshold, policy enforcer logic 230 determines that the hardware-based characteristics are not indicative of any kind of tampering, and therefore, determines that such characteristics are valid. If the determined hardware-based characteristics exceed the predetermined threshold (e.g., such characteristics are too high or low), policy enforcer logic 230 determines that emergency access circuit 214 and/or computing device 204 have been tampered with. Variances in hardware-based characteristics, such as temperature and/or voltage, may be advantageously used to detect certain various tampering attempts, such as a cold boot attacks, glitch attacks, etc.

Policy enforcer logic 230 may also query a trusted platform module (TPM) (not shown) or other type of secure cryptoprocessor for a hash key summary of the hardware and/or software configuration of emergency access circuit 214 and computing device 214. Upon determining the hash key summary, policy enforcer logic 230 verifies whether the hash key summary is the original hash key summary (e.g., the hash key summary determined at the time of provisioning computing device 204). For example, a memory of emergency access circuit 214 may store the original hash key summary. The original hash key summary may be stored in a memory (other than memory 222) included in emergency access circuit 214 and/or main memory 216. Policy enforcer logic 230 compares the hash key summary received from the TPM to the original hash key summary. Policy enforcer logic 230 determines that the received hash key summary is valid if it is the same as the original hash key summary and determines that emergency access circuit 214 and/or computing device 204 have been tampered with. If the original hash key summary and the received hash key summary are not the same, policy enforcer logic 230 determines that emergency access circuit 214 and/or computing device 204 have been tampered with. The TPM may be included as part of emergency access circuit 214 or computing device 204.

It is noted that the credentials stored by emergency access circuit 214, the predetermined list of locations and/or networks, the predetermined thresholds, and/or the hash key summary described above may be stored in one or more configuration registers 226 maintained by memory 222 and/or may be retrieved from access management service 208.

In response to determining that an authorized user has requested elevated privileges, determining that emergency access circuit 214 and/or computing device 204 have not been tampered with, and/or determining that computing device 204 is located in an authorized location and/or connected to an authorized network, emergency access circuit 214 provides a request for elevated privileges to access management service 208. The request is provided in a secure fashion to prevent a malicious entity from accessing the contents of request and also to ensure that the request is coming from emergency access circuit 214. For instance, as shown in FIG. 2, secure channel logic 260 may generate an encrypted request 246. Secure channel logic 260 may generate encrypted request 246 using a public key of key(s) 228 associated with access management service 208. Encrypted request 246 may specify a unique identifier of the user and/or computing device 204, the resource of resource(s) 210 attempting to be accessed, a uniform resource identifier (e.g., an Internet Protocol (IP) address) of computing device 204, the credentials provided by the user, the location of computing device 204, the network to which computing device 204 is connected, the hardware-based characteristics, the hash key summary, etc. Request 246 may be encrypted in accordance with any technique known in the art, including, but not limited to, a Rivest-Shamir-Adleman (RSA) encryption-based techniques, ElGamal encryption-based techniques, Digital Signature Standard (DSS) encryption-based techniques, etc.

As further shown in FIG. 2, secure channel logic 260 may provide encrypted request 246 to bus interface(s) 232, which provides encrypted request 246 to network interface 228. Network interface 228 provides encrypted request 246 to access management service 208 via network 228. Alternatively, bus interface(s) 232 may be configured to provide encrypted request 246 to main processor 212, which in turn, provides encrypted request 246 to network interface 228.

Upon receiving encrypted request 246, access management service 208 decrypts encrypted request 246, for example, using its private key, and determines whether the user requesting elevated privileges is authorized to request such privileges. For instance, access management service 208 may comprise one or more user profiles 234. Each of user profile(s) associates a particular user and/or computing device with at least one resource of resource(s) 210 and the actions that the user is allowed to perform with respect to the at least one resource in accordance with the elevated privileges. Each of user profile(s) 234 may further associate the valid credentials of the user, valid locations and/or networks for a respective computing device (e.g., computing device 204) enabled to provide requests for elevated privileges the credential, acceptable hardware-based characteristics for such a computing device, the hash key summary for such a computing device, etc.

Access management service 208 compares the information specified by request 246 to the information stored by a user profile of user profile(s) 234 identified by request 246. If the information matches and request 246 identifies a resource of resource(s) 210 for which the user is authorized to request elevated privileges and further identifies an allowed action to be performed with such a resource (as specified by the user profile), access management service 208 determines that the user requesting elevated privileges is authorized to do so. In response to such a determination, access management service 208 may send an encrypted response 248 to emergency access circuit 214, via network 206, indicating that the user is authorized to request elevated privileges. For example, access management service 208 may store a public key associated with emergency access circuit 214 (and corresponding to a private key of key(s) 228 of encrypted access circuit 214) and encrypt response 248 using the public key. In response to determining that the information specified by request 246 does not match the information in the corresponding user profile of user profile(s) 234, access management service 208 may send an encrypted response to emergency access circuit 214, via network 206, indicating that the user is not authorized to request elevated privileges.

Responses sent by access management service 208 (e.g., response 248) are received by network interface 228 of computing device 204. As shown in FIG. 2, network interface 228 may provide such responses directly to emergency access circuit 214 via bus interface(s) 232. Alternatively, network interface 228 may provide such responses to main processor 212, which in turn provides such responses to emergency access circuit 214 via bus interface(s) 232.

As further shown in FIG. 2, bus interface(s) 232 provide encrypted response 248 to secure channel logic 260, which decrypts encrypted response 248 using a private key of key(s) 228 associated with emergency access circuit 214. Secure channel logic 260 may determine whether the decrypted response indicates that the user is authorized to receive elevated privileges. If a determination is made that decrypted response indicates that the user is not authorized, the user's request is denied. Optionally, an error or denial message may be displayed to the user, e.g., via user interface 242. If a determination is made that the decrypted response indicates that the user is authorized, secure channel logic 260 becomes enabled to access key 224 from memory 222. For instance, memory access logic (shown as memory access logic 250) configured to access memory 222 may become activated. Upon memory access logic 250 being activated, memory access logic 250 provides a read command 252 to memory 222, identifying an address at which key 224 is located. Such an address may be hardcoded in memory access logic 250. Upon receiving read command 252, memory 222 provides a response 254 comprising key 224.

Secure channel logic 260 utilizes key 224 to encrypt and/or digitally sign an action request 256 for performing an action with respect to the resource of resource(s) 210 (identified by request 246) in accordance with the elevated privileges. The digital signature of action request 256 assures the recipient of action request 256 (e.g., access management service 208) of the identity of the sender (i.e., emergency access circuit 214) and of the integrity of action request 256. As shown in FIG. 2, secure channel logic 260 provides access request 256 to bus interface(s) 232, which in turn, provides access request 256 to network interface 228. Network interface 228 provides action request 256 to access management service 208 via network 206. Alternatively, bus interface(s) 232 may provide action request 256 to main processor 212, and main processor 212 provides action request 256 to network interface 228.

Upon receiving action request 256, access management service 208 decrypts action request 256, for example, using a public key associated with emergency access circuit 214 and corresponding to key 224, and/or verifies the identity of the sender of action request 256 based on the digital signature. If the identity is verified, request 256 serves as notice to access management service 208 that emergency access circuit 214 has obtained private key 224 (i.e., the glass has been broken). Upon successful verification, access management service 208 provides a command 258 to the resource of resource(s) 210 identified by action request 256, and the action specified by action request 256 is performed. Access management service 208 may log all actions performed under elevated privileges for auditing purposes. If the identity is not verified (e.g., the digital signature is incorrect), action request 256 is denied and the action specified by action request 256 is not performed.

In response to determining that an unauthorized user has requested elevated privileges, determining that emergency access circuit 214 and/or computing device 204 has been tampered with, and/or determining that computing device 204 is located in an unauthorized location and/or connected to an unauthorized network, request 246 is not transmitted, and the user is not enabled to request elevated privileges.

In accordance with an embodiment, the number of times that a user is allowed to request elevated privileges is limited. For instance, as shown in FIG. 2, memory 222 may comprise one or more configuration registers 226. Configuration register(s) 226 may be located in a region of memory 222 that is readily accessible by policy enforcer logic 230 (i.e., configuration registers 226 are located in a memory region other than the memory region in which key 224 is located). A first configuration register of configuration register(s) 226 may store a maximum number of requests for elevated privileges that a user is enabled to make (e.g., via application 218). A second configuration register of configuration register(s) 226 may function as a counter and stores the total number of requests that have been made by the user. For example, each time a request 238 is transmitted from main processor 212 to emergency access circuit 214 (responsive to a user initiating a request for elevated privileges via application 218), the second configuration register may be incremented. Policy enforcer logic 230 may then compare the value stored in the second configuration register to the maximum number value stored in the first configuration register. If the value stored in the second configuration register is less than or equal to the maximum number, then the elevated privilege request process described above (e.g., in which secure channel logic 260 issues request 246 if all other necessary conditions are satisfied (e.g., determining that an authorized user has requested elevated privileges, determining that emergency access circuit 214 and/or computing device 204 have not been tampered with, and/or determining that computing device 204 is located in an authorized location and/or connected to an authorized network, etc.)).

If the value stored in the second configuration register is greater than the maximum number, then policy enforcer logic 230 is not enabled to continue the elevated privilege request, and thus, the user is not authorized to obtain elevated privileges.

**In** accordance with an embodiment, configuration register(s) 226 may comprise a third configuration register that stores a maximum number of requests for elevated privileges that may be denied and a fourth configuration register that functions as a counter and stores the total number of such requests that have been denied. Each time a request 238 is denied, the fourth configuration register may be incremented.

As an added security measure, upon determining that the value stored in the second configuration register is greater than the maximum number stored in the first configuration register and/or upon determining that the value stored in the fourth configuration register is greater than the maximum number stored in the third configuration register, key 224 may be erased from memory 222. For instance, policy enforcer logic 230 may send a command to secure channel logic 260 that activates memory access logic 250. Memory access logic 250 may send a command that causes key 224 to be erased (e.g., by overwriting the memory region at which key 224 is located with another value or by wiping a key that may be used to encrypt memory 222).

The usage of configuration register(s) 226, as described above, provide logical constraints on the number of times a user may request elevated credentials, and therefore, limits the accessibility to resource(s) 210, for example, from malicious entities that obtain access to computing device 204.

It is noted that the values described above with respect to configuration register(s) 226 are purely exemplary and that a determination as to whether the elevated privilege request process may continue may be based on determining whether the number of requests stored in the second configuration register and/or the number of times such requests have been denied stored in the fourth configuration register has a different type of predetermined relationships with the value stored in the first configuration register and the third configuration register, respectively (including, but not limited to, whether the number of requests made/denied is greater than, less than, greater than or equal to, less than or equal to, or equal to the number value stored in the first configuration register and/or third configuration register, respectively).

In accordance with an embodiment, rather than erasing private key 224, the value stored in the second configuration register may be reset and/or a new private key may be stored in memory 222, thereby enabling a user to perform subsequent break glass operations.

In accordance with an embodiment, when a request for elevated privileges is granted, the elevated privileges may be granted for a limited amount of time. The amount of time may be specified by a timer, e.g., maintained by a configuration register of configuration register(s) 226. Alternatively, the time limit may be provided by access management server 208, for example, via response 248. Once the time limit expires, the elevated privileges are revoked.

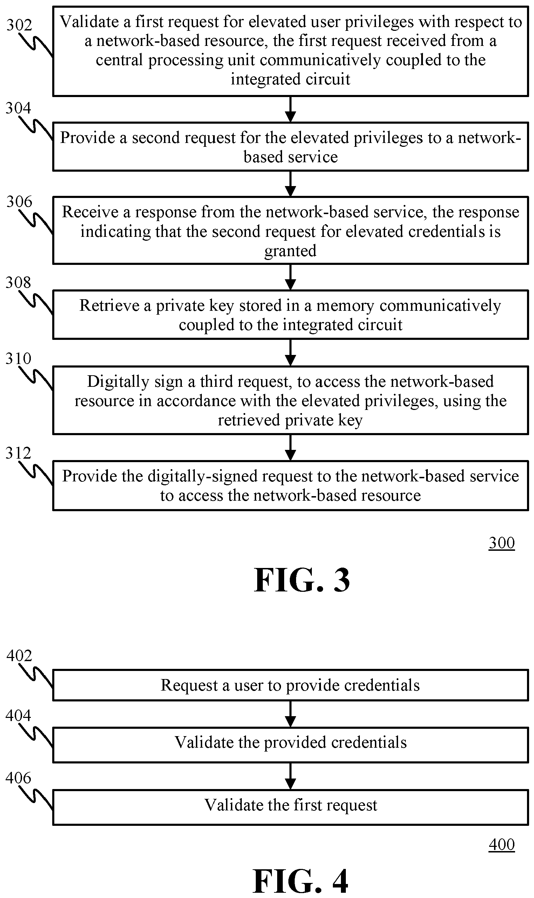

Accordingly, elevated privileges may be obtained based on a private key maintained by emergency access circuit 214 in many ways. For example, FIG. 3 depicts a flowchart 300 of an example method performed by an integrated circuit of a computing device for obtaining elevated credentials based on a private key maintained by the integrated circuit in accordance with an example embodiment. The method of flowchart 300 will be described with continued reference to system 200 of FIG. 2, although the method is not limited to that implementation. Other structural and operational embodiments will be apparent to persons skilled in the relevant art(s) based on the discussion regarding flowchart 300 and system 200 of FIG. 2.

As shown in FIG. 3, the method of flowchart 300 begins at step 302, in which a first request for elevated user privileges with respect to a network-based resource is validated. The first request is received from a central processing unit communicatively coupled to the integrated circuit. For example, with reference to FIG. 2, bus interface(s) 232 of emergency access circuit 214 receives first request 238 from main processor 212. Request 238 is for elevated user privileges with respect to a network-based resource (e.g., resource(s) 210). Request 238 may be provided by main processor 212 responsive to a user initiating a request for elevated privileges via application 218. Bus interface(s) 232 provides request 238 to policy enforcer logic 230. Policy enforcer logic 230 is configured to validate request 238. Request 238 may be validated using various techniques. Additional details regarding validating techniques are described below with reference to FIGS. 4-6.

At step 304, a second request for the elevated privileges is provided to a network-based service. For example, with reference to FIG. 2, after first request 238 is validated, secure channel logic 260 may provide second request 246 to bus interface(s) 232. Bus interface(s) 232 may provide second request 246 to network interface 228, which provides second request 246 to network-based service (e.g., access management service 208) via network 206. Alternatively, bus interface(s) 232 may provide second request 246 to main processor 212, and main processor 212 may provide second request 246 to network interface 228.

In accordance with one or more embodiments, the second request comprises at least one of an identifier of the computing device (e.g., computing device 204), credentials provided by a user, an identifier of the network-based resource (e.g., resource(s) 210), voltage characteristics of the computing device, temperature characteristics of the computing device, or a location of the computing device.

At step 306, a response from the network-based service is received. The response indicates that the second request for elevated credentials is granted. For example, with reference to FIG. 2, access management service 208 determines whether second request 246 is from an authorized user by comparing the information specified by second request 246 to a corresponding profile of user profile(s) 234. Responsive to determining that second request 246 is from an authorized user, access management service 208 provides a response 248 to computing device 204. Response 248 is received by network interface 228. Network interface 238 may provide response 248 to bus interface(s) 232 of emergency access circuit 214, and bus interface(s) 232 provide response 248 to secure channel logic 260. Alternatively, network interface 228 may provide response 248 to main processor, 212, and main processor 212 provides response 248 to bus interface(s) 232.

At step 308, responsive to receiving the response, a private key stored in a memory communicatively coupled to the integrated circuit is retrieved. For example, with reference to FIG. 2, responsive to receiving response 248, secure channel logic 260 activates memory access logic 250. Memory access logic 250 is configured to read a memory region of memory 222 at which key 224 is located. Memory access logic 250 may provide a read command 252 specifying the address of the memory region to memory 222. Memory 222 may provide a response 254 comprising key 224 to memory access logic 250.

At step 310, a third request, to access the network-based resource in accordance with the elevated privileges, is digitally signed using the retrieved private key. For example, with reference to FIG. 2, secure channel logic 260 may digitally sign request 256 using key 224.

At step 312, the digitally-signed request is provided to the network-based service to access the network-based resource. For example, with reference to FIG. 2, secure channel logic 260 provides digitally-signed request 256 to bus interface(s) 232. Bus interface(s) 232 may provide request 256 to network interface 228, which provides request 256 to access management service 208 via network 206. Alternatively, bus interface(s) 232 provides request 256 to main processor 212, and main processor 212 provides request 256 to network interface 228. Upon receiving request 256, access management service 208 verifies the identity of the sender of request 256 based on the digital signature. If the identity is verified, access management service 208 provides command 258 to the resource of resource(s) 210 identified by request 256, and the action specified by request 256 is performed. If the identity is not verified (e.g., the digital signature is incorrect), request 256 is denied and the action specified by request 256 is not performed.

FIG. 4 depicts a flowchart 400 of an example method for validating a request for elevated privileges in accordance with an example embodiment. The method of flowchart 400 will be described with continued reference to system 200 of FIG. 2, although the method is not limited to that implementation. Other structural and operational embodiments will be apparent to persons skilled in the relevant art(s) based on the discussion regarding flowchart 400 and system 200 of FIG. 2.

As shown in FIG. 4, the method of flowchart 400 begins at step 402, in which a user is requested to provide credentials. For example, with reference to FIG. 2, policy enforcer logic 230 may issue prompt 244, which may be displayed via user interface 242.

In accordance with one or more embodiments, the credentials comprise at least one of biometric information, environmental information, a passcode, a username, or password.

At step 404, the provided credentials are validated. For example, with reference to FIG. 2, policy enforcer logic 230 compares the credentials inputted by the user to credentials stored by emergency access circuit 214. If the inputted credentials match the stored credentials, the inputted credentials are validated.

At step 406, responsive to validating the provided credentials, the first request is validated. For example, with reference to FIG. 2, policy enforcer logic 230 validates first request 238 responsive to validating the provided credentials.

FIG. 5 depicts a flowchart 500 of an example method for validating a request for elevated privileges in accordance with another example embodiment. The method of flowchart 500 will be described with continued reference to system 200 of FIG. 2, although the method is not limited to that implementation. Other structural and operational embodiments will be apparent to persons skilled in the relevant art(s) based on the discussion regarding flowchart 500 and system 200 of FIG. 2.

As shown in FIG. 5, the method of flowchart 500 begins at step 502, in which a location in which the computing device is located. For example, with reference to FIG. 2, policy enforcer logic 230 may be configured to determine a location in which computing device 204 is located and/or a network to which computing device 204 is connected (e.g., a cellular network, a WAN, a LAN, an enterprise network, etc.), for example, by querying other components (e.g., the operating system, a GPS module, etc.) of computing device 204.

At step 504, at least one of voltage characteristics or temperature characteristics associated with the computing device are determined. For example, with reference to FIG. 2, policy enforcer logic 230 may be configured to determine at least one of voltage characteristics or temperature characteristics, for example, by querying other components (e.g., the operating system, temperature sensors, voltage sensors, etc.) of computing device 204.

At step 506, a determination is made that the location is one from a plurality of predetermined locations. For example, with reference to FIG. 2, policy enforcer logic 230 may be configured to determine that the location is one from a plurality of predetermined locations, for example, by comparing the determined location to a list of predetermined locations stored in emergency access circuit 214.

At step 508, a determination is made that at least one of the voltage characteristics are below a predetermined threshold or the temperature characteristics are below a predetermined threshold. For example, with reference to FIG. 2, policy enforcer logic 230 determines that at least one of the voltage characteristics are below a predetermined threshold or the temperature characteristics are below a predetermined threshold, for example, by comparing the determined voltage and/or temperature characteristic values to predetermined voltage and/or temperature characteristic values stored in emergency access circuit 214.

At step 510, responsive to determining that the location is one from the plurality of predetermined locations and determining that at least one of the voltage characteristics are below a predetermined threshold or the temperature characteristics are below a predetermined threshold, the first request is validated. For example, with reference to FIG. 2, policy enforcer logic 230 validates request 238 responsive to determining that the location is one from the plurality of predetermined locations and determining that at least one of the voltage characteristics are below a predetermined threshold or the temperature characteristics are below a predetermined threshold.

In accordance with one or more embodiments, the integrated circuit comprises a configuration register that maintains a number of first requests received from the central processing circuit. For example, with reference to FIG. 2, emergency access circuit 214 comprises configuration register(s) 226. One of configuration register(s) 226 stores a number of first requests 238 of main processor 222. Policy enforcer logic 230 may validate first request 238 based on whether the number of first requests 238 has a predetermined relationship with a predetermined threshold. Such an embodiment is described below with reference to FIG. 6.

FIG. 6 depicts a flowchart 600 of an example method for validating a request for elevated privileges in accordance with a further example embodiment. The method of flowchart 600 will be described with continued reference to system 200 of FIG. 2, although the method is not limited to that implementation. Other structural and operational embodiments will be apparent to persons skilled in the relevant art(s) based on the discussion regarding flowchart 600 and system 200 of FIG. 2.

As shown in FIG. 6, the method of flowchart 600 begins at step 602, in which a determination is made as to whether the number of first request has a predetermined relationship with a predetermined threshold. In response to a determination that the number of first requests does not have the predetermined relationship with the predetermined relationship, flow continues to step 604. Otherwise, flow continues to step 606. For example, with reference to FIG. 2, policy enforcer logic 230 determines whether the number of first requests 238 has a predetermined relationship with a predetermined threshold. The predetermined threshold may be stored in a first configuration register of configuration register(s) 226. The number of first requests 238 may be stored in a second configuration register of configuration register(s) 226. Policy enforcer logic 230 may compare the number of first requests 238 stored in the second configuration register to the predetermined threshold stored in the first configuration register. If the number of first requests 238 does not have the predetermined relationship with the predetermined threshold (e.g., the number of first requests 238 is above the predetermined threshold), flow continues to step 604. If the number of first requests 238 has the predetermined relationship with the predetermined threshold (e.g., the number of first requests 238 is below or equal to the predetermined threshold), flow continues to step 606.

At step 604, the first request is validated. For example, with reference to FIG. 2, policy enforcer logic 230 validates first request 238.

At step 606, the first request is denied. For example, with reference to FIG. 2, policy enforcer logic 230 denies first request 238.

As described above, instead of storing private key 224 in memory 222 of emergency access circuit 214, emergency access circuit 214 may receive the private key from access management service 208. For example, FIG. 7 depicts a block diagram of a system 700 for obtaining elevated privileges for emergency access to a resource based on a private key received from a network-based service in accordance with an example embodiment. As shown in FIG. 7, system 700 includes a cloud services platform 702 and a computing device 704 that are communicatively coupled via a network 706. Cloud services platform 702, computing device 704, and network 706 are examples of cloud services platform 202, computing device 204, and network 206, as respectively described above with reference to FIG. 2.

As shown in FIG. 7, cloud services platform 702 comprises an access management service 702 and one or more resources 710, which are examples of access management service 208 and resource(s) 210, as respectively described above with reference to FIG. 2.

Computing device 706 comprises at least a main processor 712 and an emergency access circuit 714 that is communicatively coupled to main processor 712. Computing device 704 is also coupled to a display 740, which is an example of display 240. Computing device 704 further comprises a main memory 716. Processor 712, emergency access circuit 714, and main memory 716 are examples of processor 212, emergency access circuit 214, and main memory 216, as respectively described above with reference to FIG. 2. Computing device 704 further comprises a network interface 728, which is an example of network interface 228, as described above with reference to FIG. 2.

Emergency access circuit 714 comprises one or more bus interfaces 732, policy enforcer logic 730, secure channel logic 760, and/or one or more key(s) 728, which are examples of bus interface(s) 232, policy enforcer logic 230, secure channel logic 260, and key(s) 228 as respectively described in FIG. 2. As shown in FIG. 7, emergency access circuit 714 may further comprise a memory 722, which is an example of memory 222.

The process for requesting elevated privileges with respect to resource(s) 710 is performed in a similar manner as described above with reference to FIG. 2. However, rather than retrieving a private key (for digitally signing action requests) from memory 222, such a private key is obtained from access management service 708.

For instance, to request elevated privileges, the user may initiate request for such privileges using application 718, for example, using one or more user interface (e.g., a graphical user interface (GUI) elements that enable the user to request elevated privileges). Upon initiating the request, main processor 712 may execute code 736 of application 718 that causes main processor 712 to send a request 738 for elevated privileges to emergency access circuit 714. Request 738 is received via bus interface(s) 732. Bus interface(s) 732 provides request 738 to policy enforcer logic 730.

Policy enforcer logic 730 of emergency access circuit 714 is configured to verify whether request 738 originated from an authorized user. For instance, responsive to receiving request 738, emergency access circuit 714 may cause a prompt 744 to be provided to display 740, via bus interface(s) 732. In accordance with an embodiment, prompt 744 is provided directly from emergency access circuit 714 to display 740 (e.g., via bus interface(s) 732). In accordance with another embodiment, emergency access circuit 714 provides prompt 744 to main processor 712 (e.g., via bus interface(s) 732), and main processor 712 causes prompt 744 to be displayed via user interface 742. Prompt 744 may solicit certain credentials from the user in a similar manner as described above with reference to prompt 244, as described above with reference to FIG. 2. Upon a user providing credentials, policy enforcer logic 730 verifies whether the credentials provided by the user are correct in a similar manner as described above with reference to FIG. 2. Policy enforcer logic 730 may also perform other types of validation as described above with reference to FIG. 2.

Upon successful validation, emergency access circuit 714 provides a request for elevated privileges to access management service 708. The request is provided in a secure fashion to prevent a malicious entity from accessing the contents of request and also to ensure that the request is coming from emergency access circuit 714. For instance, as shown in FIG. 7, secure channel logic 760 may generate an encrypted request 746. Secure channel logic 760 may generate encrypted request 746 using a public key of key(s) 728 associated with access management service 708. Encrypted request 746 may specify an unique identifier of the user and/or computing device 704, the resource of resource(s) attempting to be accessed, a uniform resource identifier (e.g., an Internet Protocol (IP) address) of computing device 704, the credentials provided by the user, the location of computing device 704, the network to which computing device 704 is connected, the hardware-based characteristics, a hash key summary, etc. Request 746 may be encrypted in accordance with any technique known in the art, including, but not limited to, a Rivest-Shamir-Adleman (RSA) encryption-based techniques, ElGamal encryption-based techniques, Digital Signature Standard (DSS) encryption-based techniques, etc.

As further shown in FIG. 7, secure channel logic 760 may provide encrypted request 746 to bus interface(s) 732, which provides encrypted request 746 to network interface 728. Network interface 728 provides encrypted request 746 to access management service 708 via network 728. Alternatively, bus interface(s) 732 may be configured to provide encrypted request 746 to main processor 712, which in turn, provides encrypted request 746 to network interface 728.

Upon receiving encrypted request 746, access management service 708 decrypts encrypted request 746, for example, using its private key, and determines whether the user requesting elevated privileges is authorized to request such privileges. For instance, access management service 708 may comprise one or more user profiles 734. Each of user profile(s) associates a particular user and/or computing device with at least one resource of resource(s) 710 and the actions that the user is allowed to perform with respect to the at least one resource in accordance with the elevated privileges. Each of user profile(s) 734 may further associate the valid credentials of the user, valid locations and/or networks for a respective computing device (e.g., computing device 704) enabled to provide requests for elevated privileges the credential, acceptable hardware-based characteristics for such a computing device, the hash key summary for such a computing device, etc.

Access management service 708 compares the information specified by request 746 to the information stored by a user profile of user profile(s) 734 identified by request 746. If the information matches and request 746 identifies a resource of resource(s) 710 for which the user is authorized to request elevated privileges and further identifies an allowed action to be performed with such a resource (as specified by the user profile), access management service 708 determines that the user requesting elevated privileges is authorized to do so. In response to such a determination, access management service 708 generates a response 748 that comprises a private key 724 and indicates that the user is authorized to request elevated privileges. Private key 724 is an example of private key 224, as described above with reference to FIG. 2. Private key 724 may be stored in a memory (not shown) communicatively coupled to access management service 708. Access management service 708 sends response 748 to emergency access circuit 714, via network 706, in an encrypted fashion. For example, access management service 708 may store a public key associated with emergency access circuit 714 (and corresponding to a private key of key(s) 728 of encrypted access circuit 714) and encrypt response 748 using the public key. In response to determining that the information specified by request 746 does not match the information in the corresponding user profile of user profile(s) 734, access management service 708 may send an encrypted response (not including private key 724) to emergency access circuit 714, via network 706, indicating that the user is not authorized to request elevated privileges.

Responses sent by access management service 708 (e.g., response 748) are received by network interface 728 of computing device 704. As shown in FIG. 7, network interface 728 may provide such responses directly to emergency access circuit 714 via bus interface(s) 732. Alternatively, network interface 728 may provide such responses to main processor 712, which in turn provides such responses to emergency access circuit 714 via bus interface(s) 732.

As further shown in FIG. 7, bus interface(s) 732 provides encrypted response 748 to secure channel logic 760, which decrypts encrypted response 748 using a private key of key(s) 728 associated with emergency access circuit 714. Secure channel logic 760 may determine whether the decrypted response indicates that the user is authorized to receive elevated privileges. If a determination is made that decrypted response indicates that the user is not authorized, the user's request is denied. Optionally, an error or denial message may be displayed to the user, e.g., via user interface 742. If a determination is made that the decrypted response indicates that the user is authorized, secure channel logic 760 obtains private key 724 included from response 748.

Secure channel logic 760 utilizes the obtained private key 724 to encrypt and/or digitally sign an action request 756 for performing an action with respect to the resource of resource(s) 710 (identified by request 746) in accordance with the elevated privileges. The digital signature of action request 756 assures the recipient of action request 756 (e.g., access management service 708) of the identity of the sender (i.e., emergency access circuit 714) and of the integrity of action request 256. As shown in FIG. 7, secure channel logic 760 provides access request 756 to bus interface(s) 732, which in turn, provides access request 746 to network interface 728. Network interface 728 provides action request 756 to access management service 708 via network 706. Alternatively, bus interface(s) 732 may provide action request 756 to main processor 712, and main processor 712 provides action request 756 to network interface 728.

Upon receiving action request 756, access management service 708 decrypts action request 756, for example, using a public key associated with emergency access circuit 714 and corresponding to key 724, and/or verifies the identity of the sender of action request 756 based on the digital signature. If the identity is verified, access management service 708 provides a command 758 to the resource of resource(s) 710 identified by action request 756, and the action specified by action request 756 is performed. If the identity is not verified (e.g., the digital signature is incorrect), action request 756 is denied and the action specified by action request 756 is not performed.

In response to determining that an unauthorized user has requested elevated privileges, determining that emergency access circuit 714 and/or computing device 704 has been tampered with, and/or determining that computing device 704 is located in an unauthorized location and/or connected to an unauthorized network, request 746 is not transmitted, and the user is not enabled to request elevated privileges.

In accordance with an embodiment, the number of times that a user is allowed to request elevated privileges is limited in a similar manner as described above with reference to FIG. 2. For instance, as shown in FIG. 7, memory 722 may comprise one or more configuration registers 726, which are examples of configuration register(s) 226, as shown in FIG. 2. As described above with reference to FIG. 2, a first configuration register of configuration register(s) 726 may store a maximum number of requests for elevated privileges that a user is enabled to make (e.g., via application 718). A second configuration register of configuration register(s) 726 may function as a counter and stores the total number of requests that have been made by the user. Policy enforcer logic 730 may compare the value stored in the second configuration register to the maximum number value stored in the first configuration register. If the value stored in the second configuration register is less than or equal to the maximum number, then the elevated privilege request process described above is continued.

If the value stored in the second configuration register is greater than the maximum number, then policy enforcer logic 730 is not enabled to continue the elevated privilege request, and thus, the user is not authorized to obtain elevated privileges.

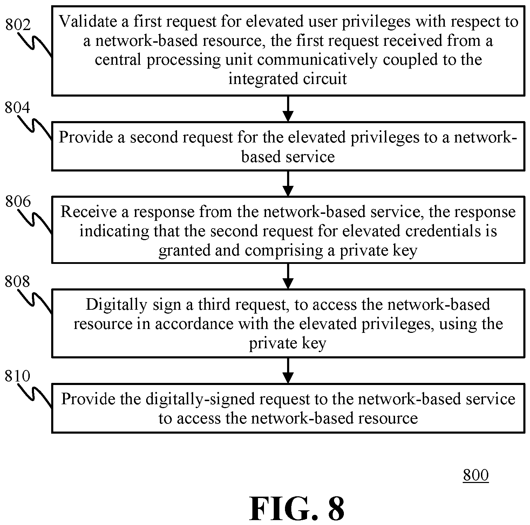

Accordingly, elevated privileges may be granted to a user based on a private key obtained from a network-based service in many ways. For example, FIG. 8 depicts a flowchart 800 of an example method performed by an integrated circuit of a computing device for obtaining elevated credentials based on a private key obtained from a network-based service in accordance with an example embodiment. The method of flowchart 800 will be described with continued reference to system 700 of FIG. 7, although the method is not limited to that implementation. Other structural and operational embodiments will be apparent to persons skilled in the relevant art(s) based on the discussion regarding flowchart 800 and system 700 of FIG. 7.

As shown in FIG. 8, the method of flowchart 800 begins at step 802, in which a first request for elevated user privileges with respect to a network-based resource is validated. The first request is received from a central processing unit communicatively coupled to the integrated circuit. For example, with reference to FIG. 7, bus interface(s) 732 of emergency access circuit 714 receives first request 738 from main processor 712. Request 738 is for elevated user privileges with respect to a network-based resource (e.g., resource(s) 710). Request 738 may be provided by main processor 712 responsive to a user initiated a request for elevated privileges via application 718. Bus interface(s) 732 provides request 738 to policy enforcer logic 730. Policy enforcer logic 730 is configured to validate request 738. Request 738 may be validated using various techniques, including the techniques described above with reference to FIGS. 4-6.

At step 804, a second request for the elevated privileges is provided to a network-based service. For example, with reference to FIG. 7, after first request 738 is validated, secure channel logic 760 may provide second request 746 to bus interface(s) 732. Bus interface(s) 732 may provide second request 746 to network interface 728, which provides second request 746 to network-based service (e.g., access management service 708) via network 706. Alternatively, bus interface(s) 732 may provide second request 746 to main processor 712, and main processor 712 may provide second request 746 to network interface 728.

In accordance with one or more embodiments, the second request comprises at least one of an identifier of the computing device (e.g., computing device 704), credentials provided by a user, an identifier of the network-based resource (e.g., resource(s) 710), voltage characteristics of the computing device, temperature characteristics of the computing device, or a location of the computing device.

At step 806, a response from the network-based service is received. The response indicates that the second request for elevated credentials is granted and comprises a private key. For example, with reference to FIG. 7, access management service 708 determines whether second request 746 is from an authorized user by comparing the information specified by second request 746 to a corresponding profile of user profile(s) 734. Responsive to determining that second request 746 is from an authorized user, access management service 708 provides a response 748 to computing device 704. Response 748 includes private key 724. Response 748 is received by network interface 728. Network interface 738 may provide response 748 to bus interface(s) 732 of emergency access circuit 714, and bus interface(s) 732 provides response 748 to secure channel logic 760. Alternatively, network interface 728 may provide response 748 to main processor 712, and main processor 712 provides response 748 to bus interface(s) 732.

At step 808, a third request, to access the network-based resource in accordance with the elevated privileges, is digitally signed using the private key. For example, with reference to FIG. 7, secure channel logic 760 may digitally sign request 756 using key 724 obtained via response 748.

At step 810, the digitally-signed request is provided to the network-based service to access the network-based resource. For example, with reference to FIG. 7, secure channel logic 760 provides digitally-signed request 756 to bus interface(s) 732. Bus interface(s) 732 may provide request 756 to network interface 728, which provides request 756 to access management service 708 via network 706. Alternatively, bus interface(s) 732 provides request 756 to main processor 712, and main processor 712 provides request 756 to network interface 728. Upon receiving request 756, access management service 708 verifies the identity of the sender of request 756 based on the digital signature. If the identity is verified, access management service 708 provides command 758 to the resource of resource(s) 710 identified by request 756, and the action specified by request 756 is performed. If the identity is not verified (e.g., the digital signature is incorrect), request 756 is denied and the action specified by request 756 is not performed.

### III. Example Computer System Implementation

The systems and methods described above, including the obtaining of elevated privileges and performing actions based thereon in reference to FIGS. 1-8, may be implemented in hardware, or hardware combined with one or both of software and/or firmware. For example, cloud services platform 102, access management service 108, resource(s) 110, network 106, and computing device 104, cloud services platform 202, access management service 208, user profile(s) 234, resource(s) 210, network 206, user interface 242, computing device 204, cloud services platform 702, access management service 708, user profile(s) 734, resource(s) 710, network 706, user interface 742, computing device 704, and/or each of the components described therein, and flowcharts 300, 400, 500, 600, and/or flowchart 800 may be each implemented as computer program code/instructions configured to be executed in one or more processors and stored in a computer readable storage medium. Alternatively, cloud services platform 102, access management service 108, resource(s) 110, and computing device 104, cloud services platform 202, access management service 208, user profile(s) 234, resource(s) 210, user interface 242, computing device 204, main processor 112, emergency access circuit 114, main memory 116, main processor 212, emergency access circuit 214, main memory 216, main processor 712, emergency access circuit 714, main memory 716, cloud services platform 702, access management service 708, user profile(s) 734, resource(s) 710, user interface 742, computing device 704, and/or each of the components described therein, and flowcharts 300, 400, 500, 600, and/or flowchart 800 may be implemented as hardware logic/electrical circuitry. In an embodiment, user interface 242, computing device 204, main processor 112, emergency access circuit 114, main memory 116, main processor 212, emergency access circuit 214, main memory 216, main processor 712, emergency access circuit 714, main memory 716, user interface 742, computing device 704, and/or each of the components described therein, and flowcharts 300, 400, 500, 600, and/or flowchart 800 may be implemented in one or more SoCs (system on chip). An SoC may include an integrated circuit chip that includes one or more of a processor (e.g., a central processing unit (CPU), microcontroller, microprocessor, digital signal processor (DSP), etc.), memory, one or more communication interfaces, and/or further circuits, and may optionally execute received program code and/or include embedded firmware to perform functions.

FIG. 9 shows a block diagram of an exemplary mobile device 900 including a variety of optional hardware and software components, shown generally as components 902. Any number and combination of the features/elements of computing device 104, computing device 204, display 240, computing device 704, display 740, and/or each of the components described therein, and flowcharts 300, 400, 500, 600, and/or flowchart 800 may be implemented as components 902 included in a mobile device embodiment, as well as additional and/or alternative features/elements, as would be known to persons skilled in the relevant art(s). It is noted that any of components 902 can communicate with any other of components 902, although not all connections are shown, for ease of illustration. Mobile device 900 can be any of a variety of mobile devices described or mentioned elsewhere herein or otherwise known (e.g., cell phone, smartphone, handheld computer, Personal Digital Assistant (PDA), etc.) and can allow wireless two-way communications with one or more mobile devices over one or more communications networks 904, such as a cellular or satellite network, or with a local area or wide area network.

The illustrated mobile device 900 can include a controller or processor referred to as processor circuit 910 for performing such tasks as signal coding, image processing, data processing, input/output processing, power control, and/or other functions. Processor circuit 910 is an electrical and/or optical circuit implemented in one or more physical hardware electrical circuit device elements and/or integrated circuit devices (semiconductor material chips or dies) as a central processing unit (CPU), a microcontroller, a microprocessor, and/or other physical hardware processor circuit. Processor circuit 910 may execute program code stored in a computer readable medium, such as program code of one or more applications 914, operating system 912, any program code stored in memory 920, etc. Operating system 912 can control the allocation and usage of the components 902 and support for one or more application programs 914 (a.k.a. applications, "apps", etc.). Application programs 914 can include common mobile computing applications (e.g., email applications, calendars, contact managers, web browsers, messaging applications) and any other computing applications (e.g., word processing applications, mapping applications, media player applications). Processor 112, processor 212, and processor 712 are examples of processor circuit 910. Emergency access circuit 114, emergency access circuit 214, and emergency access circuit 714 (not shown) may be communicatively coupled to processor circuit 910.

As illustrated, mobile device 900 can include memory 920. Memory 920 can include non-removable memory 922 and/or removable memory 924. The non-removable memory 922 can include RAM, ROM, flash memory, a hard disk, or other well-known memory storage technologies. The removable memory 924 can include flash memory or a Subscriber Identity Module (SIM) card, which is well known in GSM communication systems, or other well-known memory storage technologies, such as "smart cards." The memory 920 can be used for storing data and/or code for running operating system 912 and applications 914. Example data can include web pages, text, images, sound files, video data, or other data sets to be sent to and/or received from one or more network servers or other devices via one or more wired or wireless networks. Memory 920 can be used to store a subscriber identifier, such as an International Mobile Subscriber Identity (IMSI), and an equipment identifier, such as an International Mobile Equipment Identifier (IMEI). Such identifiers can be transmitted to a network server to identify users and equipment. Main memory 116, main memory 216, and main memory 716 are examples of memory 920.

A number of programs may be stored in memory 920. These programs include operating system 912, one or more application programs 914, and other program modules and program data. Examples of such application programs or program modules may include, for example, computer program logic (e.g., computer program code or instructions) for implementing the systems and methods described above, including the embodiments described in reference to FIGS. 1-8.

Mobile device 900 can support one or more input devices 930, such as a touch screen 932, microphone 934, camera 936, physical keyboard 938 and/or trackball 940 and one or more output devices 950, such as a speaker 952 and a display 954.

Other possible output devices (not shown) can include piezoelectric or other haptic output devices. Some devices can serve more than one input/output function. For example, touch screen 932 and display 954 can be combined in a single input/output device. The input devices 930 can include a Natural User Interface (NUI).

Wireless modem(s) 960 can be coupled to antenna(s) (not shown) and can support two-way communications between processor circuit 910 and external devices, as is well understood in the art. The modem(s) 960 are shown generically and can include a cellular modem 966 for communicating with the mobile communication network 904 and/or other radio-based modems (e.g., Bluetooth 964 and/or Wi-Fi 962). Cellular modem 966 may be configured to enable phone calls (and optionally transmit data) according to any suitable communication standard or technology, such as GSM, 3G, 4G, 5G, etc. At least one of the wireless modem(s) 960 is typically configured for communication with one or more cellular networks, such as a GSM network for data and voice communications within a single cellular network, between cellular networks, or between the mobile device and a public switched telephone network (PSTN).

Mobile device 900 can further include at least one input/output port 980, a power supply 982, a satellite navigation system receiver 984, such as a Global Positioning System (GPS) receiver, an accelerometer 986, and/or a physical connector 990, which can be a USB port, IEEE 1394 (FireWire) port, and/or RS-232 port. The illustrated components 902 are not required or all-inclusive, as any components can be not present and other components can be additionally present as would be recognized by one skilled in the art.

FIG. 10 depicts an exemplary implementation of a computing device 1000 in which embodiments may be implemented, computing device 104, computing device 204, display 240, computing device 704, display 740, and/or each of the components described therein, and flowcharts 300, 400, 500, 600, and/or flowchart 800. The description of computing device 800 provided herein is provided for purposes of illustration, and is not intended to be limiting. Embodiments may be implemented in further types of computer systems, as would be known to persons skilled in the relevant art(s).

As shown in FIG. 10, computing device 1000 includes one or more processors, referred to as processor circuit 1002, a system memory 1004, and a bus 1006 that couples various system components including system memory 1004 to processor circuit 1002. Processor circuit 1002 is an electrical and/or optical circuit implemented in one or more physical hardware electrical circuit device elements and/or integrated circuit devices (semiconductor material chips or dies) as a central processing unit (CPU), a microcontroller, a microprocessor, and/or other physical hardware processor circuit. Processor circuit 1002 may execute program code stored in a computer readable medium, such as program code of operating system 1030, application programs 1032, other programs 1034, etc. Bus 1006 represents one or more of any of several types of bus structures, including a memory bus or memory controller, a peripheral bus, an accelerated graphics port, and a processor or local bus using any of a variety of bus architectures. System memory 1004 includes read only memory (ROM) 1008 and random access memory (RAM) 1010. A basic input/output system 1012 (BIOS) is stored in ROM 1008. Processor 112, processor 212, and processor 712 are examples of processor circuit 1002. Main memory 116, main memory 216, and main memory716 are examples of system memory 1004. Emergency access circuit 114, emergency access circuit 214, and emergency access circuit 714 (not shown in FIG. 10) may be communicatively coupled to processor circuit 1002 via bus 1006.

Computing device 1000 also has one or more of the following drives: a hard disk drive 1014 for reading from and writing to a hard disk, a magnetic disk drive 1016 for reading from or writing to a removable magnetic disk 1018, and an optical disk drive 1020 for reading from or writing to a removable optical disk 1022 such as a CD ROM, DVD ROM, or other optical media. Hard disk drive 1014, magnetic disk drive 1016, and optical disk drive 1020 are connected to bus 1006 by a hard disk drive interface 1024, a magnetic disk drive interface 1026, and an optical drive interface 1028, respectively. The drives and their associated computer-readable media provide nonvolatile storage of computer-readable instructions, data structures, program modules and other data for the computer. Although a hard disk, a removable magnetic disk and a removable optical disk are described, other types of hardware-based computer-readable storage media can be used to store data, such as flash memory cards, digital video disks, RAMs, ROMs, and other hardware storage media.

A number of program modules may be stored on the hard disk, magnetic disk, optical disk, ROM, or RAM. These programs include operating system 1030, one or more application programs 1032, other programs 1034, and program data 1036. Application programs 1032 or other programs 1034 may include, for example, computer program logic (e.g., computer program code or instructions) for implementing the systems described above, including the device management and configuration embodiments described in reference to FIGS. 1-8.

A user may enter commands and information into the computing device 1000 through input devices such as keyboard 1038 and pointing device 1040. Other input devices (not shown) may include a microphone, joystick, game pad, satellite dish, scanner, a touch screen and/or touch pad, a voice recognition system to receive voice input, a gesture recognition system to receive gesture input, or the like. These and other input devices are often connected to processor circuit 1002 through a serial port interface 1042 that is coupled to bus 1006, but may be connected by other interfaces, such as a parallel port, game port, or a universal serial bus (USB).

A display screen 1044 is also connected to bus 1006 via an interface, such as a video adapter 1046. Display screen 1044 may be external to, or incorporated in computing device 1000. Display screen 1044 may display information, as well as being a user interface for receiving user commands and/or other information (e.g., by touch, finger gestures, virtual keyboard, etc.). In addition to display screen 1044, computing device 1000 may include other peripheral output devices (not shown) such as speakers and printers.

Computing device 1000 is connected to a network 1048 (e.g., the Internet) through an adaptor or network interface 1050, a modem 1052, or other means for establishing communications over the network. Modem 1052, which may be internal or external, may be connected to bus 1006 via serial port interface 1042, as shown in FIG. 10, or may be connected to bus 1006 using another interface type, including a parallel interface.

As used herein, the terms "computer program medium," "computer-readable medium," and "computer-readable storage medium" are used to generally refer to physical hardware media such as the hard disk associated with hard disk drive 1014, removable magnetic disk 1018, removable optical disk 1022, other physical hardware media such as RAMs, ROMs, flash memory cards, digital video disks, zip disks, MEMs, nanotechnology-based storage devices, and further types of physical/tangible hardware storage media (including system memory 1004 of FIG. 10). Such computer-readable storage media are distinguished from and non-overlapping with communication media (do not include communication media). Communication media typically embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared and other wireless media, as well as wired media. Embodiments are also directed to such communication media.

As noted above, computer programs and modules (including application programs 1032 and other programs 1034) may be stored on the hard disk, magnetic disk, optical disk, ROM, RAM, or other hardware storage medium. Such computer programs may also be received via network interface 1050, serial port interface 1052, or any other interface type. Such computer programs, when executed or loaded by an application, enable computing device 1000 to implement features of embodiments discussed herein. Accordingly, such computer programs represent controllers of the computing device 1000.

Embodiments are also directed to computer program products comprising computer code or instructions stored on any computer-readable medium. Such computer program products include hard disk drives, optical disk drives, memory device packages, portable memory sticks, memory cards, and other types of physical storage hardware.

### V. Conclusion

While various embodiments have been described above, it should be understood that they have been presented by way of example only, and not limitation. It will be apparent to persons skilled in the relevant art that various changes in form and detail can be made therein without departing from the scope of the invention as defined by the claims.

## Claims

1. A method implemented by an integrated circuit (114, 214) of a computing device, comprising: validating (302) a first request (238) for elevated user privileges with respect to a network- based resource, the first request received from a central processing unit (112, 222) communicatively coupled to the integrated circuit (114);
providing (304) a second request (246) for the elevated privileges to a network-based service (208);
receiving (306) a response from the network-based service, the response indicating that the second request (246) for elevated credentials is granted;
responsive to receiving the response, retrieving (308) a private key (224) stored in a memory communicatively coupled to the integrated circuit;
digitally signing (310) a third request (256), to access the network-based resource in accordance with the elevated privileges, using the retrieved private key; and
providing (312) the digitally-signed request to the network-based service to access the network-based resource.

2. The method of claim 1, wherein said validating comprises: requesting (402) a user to provide credentials; validating (404) the provided credentials; and responsive to validating the provided credentials, validating (406) the first request.

3. The method of claim 2, wherein the credentials comprise at least one of: biometric information; environmental information; a passcode; a username; or a password.

4. The method of claim 2, wherein the second request (246) comprises at least one of: an identifier of the computing device (204); the provided credentials; an identifier of the network-based resource; voltage characteristics of the computing device; temperature characteristics of the computing device; or a location of the computing device

5. The method of claim 1, wherein said validating comprises: determining (502) a location in which the computing device (204) is located; determining (504) at least one of voltage characteristics or temperature characteristics associated with the computing device; determining (506) that the location is one from a plurality of predetermined locations; determining (508) that at least one of: the voltage characteristics are below a predetermined threshold, or the temperature characteristics are below a predetermined threshold; and responsive to determining that the location is one from the plurality of predetermined locations and determining that at least one of the voltage characteristics are below a predetermined threshold or the temperature characteristics are below a predetermined threshold, validating (510) the first request.

6. The method of claim 1, wherein the integrated circuit (214) comprises a configuration register (226) that maintains a number of first requests (238) received from the central processing unit (222).

7. The method of claim 6, wherein said validating further comprises: determining (602) whether the number of first requests (238) has a predetermined relationship with a predetermined threshold; in response to determining that the number of first requests has the predetermined relationship with the predetermined threshold, validating (606) the first request; and in response to determining that the number of first requests (238) does not have the predetermined relationship with the predetermined threshold, denying (604) the first request.

8. A computing device, comprising: at least one processor circuit; an integrated circuit communicatively (714) coupled to the at least one processor circuit (712); and a memory communicatively coupled to the integrated circuit that stores a private key, the integrated circuit configured to: validate (802) a first request (738) for elevated user privileges with respect to a network-based resource, the first request received from the at least one processor circuit; provide (804) a second request (746) for the elevated privileges to a network-based service; receive (806) a response from the network-based service, the response indicating that the second request for elevated credentials is granted; responsive to receiving the response, retrieve the private key from the memory; digitally sign (808) a third request, to access the network-based resource in accordance with the elevated privileges, using the retrieved private key; and provide (810) the digitally-signed request to the network-based service to access the network-based resource.

9. The computing device of claim 8, wherein the integrated circuit (714) is further configured to: request a user to provide credentials; validate the provided credentials; and responsive to validating the provided credentials, validate the first request.

10. The computing device of claim 9, wherein the credentials comprise at least one of: biometric information; environmental information; a passcode; a username; or a password.

11. The computing device of claim 9, wherein the second request (746) comprises at least one of: an identifier of the computing device; the provided credentials; an identifier of the network-based resource; voltage characteristics of the computing device; temperature characteristics of the computing device; or a location of the computing device

12. The computing device of claim 8, wherein the integrated circuit (714) is further configured to: determine a location in which the computing device is located; determine at least one of voltage characteristics or temperature characteristics associated with the computing device; determine that the location is one from a plurality of predetermined locations; determine that at least one of the voltage characteristics or temperature characteristics are below a predetermined threshold; and responsive to a determination that the location is one from the plurality of predetermined locations and a determination that at least one of the voltage characteristics or temperature characteristics are below a predetermined threshold, validate the first request.

13. The computing device of claim 8, wherein the integrated circuit comprises a configuration register (226) that maintains a number of first requests (738) received from the central processing unit.

14. The computing device of claim 13, wherein the integrated circuit is further configured to: determine whether the number of first requests (738) has a predetermined relationship with a predetermined threshold; in response to a determination that the number of first requests has the predetermined relationship with the predetermined threshold, validate the first request; and in response to a determination that the number of first requests does not have the predetermined relationship with the predetermined threshold, deny the first request.

15. A method implemented by an integrated circuit of a computing device, comprising: validating (302) a first request for elevated user privileges with respect to a network- based resource, the first request received from a central processing unit communicatively coupled to the integrated circuit; providing (304) a second request for the elevated privileges to a network-based service; receiving (306) a response from the network-based service, the response indicating that the second request for elevated credentials is granted and comprising a private key; digitally signing (310) a third request, to access the network-based resource in accordance with the elevated privileges, using the private key; and providing (312) the digitally-signed request to the network-based service to access the network-based resource.

## Patentansprüche

1. Verfahren, das durch eine integrierte Schaltung (114, 214) einer Datenverarbeitungsvorrichtung implementiert wird, umfassend: Validieren (302) einer ersten Anforderung (238) nach erhöhten Benutzerprivilegien in Bezug auf eine netzwerkbasierte Ressource, wobei die erste Anforderung von einer zentralen Verarbeitungseinheit (112, 222) empfangen wird, die kommunikativ mit der integrierten Schaltung (114) verbunden ist;
Bereitstellen (304) einer zweiten Anforderung (246) nach den erhöhten Privilegien an einen netzwerkbasierten Dienst (208);
Empfangen (306) einer Antwort von dem netzwerkbasierten Dienst, wobei die Antwort anzeigt, dass die zweite Anforderung (246) nach erhöhten Anmeldeinformationen gewährt wird;
in Reaktion auf das Empfangen der Antwort, Abrufen (308) eines privaten Schlüssels (224), der in einem Speicher gespeichert ist, der kommunikativ mit der integrierten Schaltung gekoppelt ist;
digitales Signieren (310) einer dritten Anforderung (256) zum Zugreifen auf die netzwerkbasierte Ressource gemäß den erhöhten Privilegien unter Verwendung des abgerufenen privaten Schlüssels; und
Bereitstellen (312) der digital signierten Anforderung an den netzwerkbasierten Dienst, um auf die netzwerkbasierte Ressource zuzugreifen.

2. Verfahren nach Anspruch 1, wobei das Validieren umfasst: Auffordern (402) eines Benutzers, Anmeldeinformationen bereitzustellen; Validieren (404) der bereitgestellten Anmeldeinformationen; und in Reaktion auf das Validieren der bereitgestellten Anmeldeinformationen, Validieren (406) der ersten Anforderung.

3. Verfahren nach Anspruch 2, wobei die Anmeldeinformationen mindestens eines aufweisen von: biometrischen Informationen; Umgebungsinformationen; einem Passcode; einem Benutzernamen; oder einem Passwort.

4. Verfahren nach Anspruch 2, wobei die zweite Anforderung (246) mindestens eines aufweist von: einer Kennung der Datenverarbeitungsvorrichtung (204); den bereitgestellten Anmeldeinformationen; einer Kennung der netzwerkbasierten Ressource; Spannungseigenschaften der Datenverarbeitungsvorrichtung; Temperatureigenschaften der Datenverarbeitungsvorrichtung; oder einem Standort der Datenverarbeitungsvorrichtung

5. Verfahren nach Anspruch 1, wobei das Validieren umfasst: Bestimmen (502) eines Ortes, an dem sich die Datenverarbeitungsvorrichtung (204) befindet; Bestimmen (504) von mindestens einer der Spannungseigenschaften oder Temperatureigenschaften, die zu der Datenverarbeitungsvorrichtung gehören; Bestimmen (506), dass der Ort einer aus einer Vielzahl von vorbestimmten Orten ist; Bestimmen (508), dass mindestens eines von: den Spannungseigenschaften unter einem vorbestimmten Schwellenwert liegt, oder den Temperatureigenschaften unter einem vorbestimmten Schwellenwert liegt; und in Reaktion auf das Bestimmen, dass der Ort einer aus der Vielzahl vorbestimmter Orte ist, und das Bestimmen, dass mindestens eine der Spannungseigenschaften unter einem vorbestimmten Schwellenwert liegt oder die Temperatureigenschaften unter einem vorbestimmten Schwellenwert liegen, Validieren (510) der ersten Anforderung.

6. Verfahren nach Anspruch 1, wobei die integrierte Schaltung (214) ein Konfigurationsregister (226) aufweist, das eine Anzahl von ersten Anforderungen (238), die von der zentralen Verarbeitungseinheit (222) empfangen wurden, verwaltet.

7. Verfahren nach Anspruch 6, wobei das Validieren ferner umfasst: Bestimmen (602), ob die Anzahl der ersten Anforderungen (238) eine vorbestimmte Beziehung zu einem vorbestimmten Schwellenwert aufweist; in Reaktion auf das Bestimmen, dass die Anzahl der ersten Anforderungen die vorbestimmte Beziehung zu dem vorbestimmten Schwellenwert aufweist, Validieren (606) der ersten Anforderung; und in Reaktion auf das Bestimmen, dass die Anzahl der ersten Anforderungen (238) nicht die vorbestimmte Beziehung zu dem vorbestimmten Schwellenwert aufweist, Ablehnen (604) der ersten Anforderung.

8. Datenverarbeitungsvorrichtung, aufweisend: mindestens eine Prozessorschaltung; eine integrierte Schaltung, die kommunikativ (714) mit der mindestens einen Prozessorschaltung (712) gekoppelt ist; und einen Speicher, der kommunikativ mit der integrierten Schaltung gekoppelt ist, die einen privaten Schlüssel speichert, wobei die integrierte Schaltung konfiguriert ist, zum: Validieren (802) einer ersten Anforderung (738) nach erhöhten Benutzerprivilegien in Bezug auf eine netzwerkbasierte Ressource, wobei die erste Anforderung von der mindestens einen Prozessorschaltung empfangen wird; Bereitstellen (804) einer zweiten Anforderung (746) nach den erhöhten Privilegien an einen netzwerkbasierten Dienst; Empfangen (806) einer Antwort von dem netzwerkbasierten Dienst, wobei die Antwort anzeigt, dass die zweite Anforderung nach erhöhten Anmeldeinformationen gewährt wird; in Reaktion auf das Empfangen der Antwort, Abrufen des privaten Schlüssels aus dem Speicher; digitales Signieren (808) einer dritten Anforderung, um auf die netzwerkbasierte Ressource gemäß den erhöhten Privilegien zuzugreifen, unter Verwendung des abgerufenen privaten Schlüssels; und Bereitstellen (810) der digital signierten Anforderung an den netzwerkbasierten Dienst, um auf die netzwerkbasierte Ressource zuzugreifen.

9. Datenverarbeitungsvorrichtung nach Anspruch 8, wobei die integrierte Schaltung (714) ferner konfiguriert ist, zum: Auffordern eines Benutzers, Anmeldeinformationen bereitzustellen; Validieren der bereitgestellten Anmeldeinformationen; und in Reaktion auf das Validieren der bereitgestellten Anmeldeinformationen, Validieren der ersten Anforderung.

10. Datenverarbeitungsvorrichtung nach Anspruch 9, wobei die Anmeldeinformationen mindestens eines aufweisen von: biometrischen Informationen; Umgebungsinformationen; einem Passcode; einem Benutzernamen; oder einem Passwort.

11. Datenverarbeitungsvorrichtung nach Anspruch 9, wobei die zweite Anforderung (746) mindestens eines aufweist von: einer Kennung der Datenverarbeitungsvorrichtung; den bereitgestellten Anmeldeinformationen; einer Kennung der netzwerkbasierten Ressource; Spannungseigenschaften der Datenverarbeitungsvorrichtung; Temperatureigenschaften der Datenverarbeitungsvorrichtung; oder einem Standort der Datenverarbeitungsvorrichtung

12. Datenverarbeitungsvorrichtung nach Anspruch 8, wobei die integrierte Schaltung (714) ferner konfiguriert ist zum: Bestimmen eines Ortes, an dem sich die Datenverarbeitungsvorrichtung befindet; Bestimmen von mindestens einer der Spannungseigenschaften oder Temperatureigenschaften, die zu der Datenverarbeitungsvorrichtung gehören; Bestimmen, dass der Ort einer aus einer Vielzahl von vorbestimmten Orten ist; Bestimmen, dass mindestens eine der Spannungseigenschaften oder Temperatureigenschaften unter einem vorbestimmten Schwellenwert liegt; und in Reaktion auf das Bestimmen, dass der Ort einer aus der Vielzahl von vorbestimmten Orten ist, und das Bestimmen, dass mindestens eine der Spannungseigenschaften oder Temperatureigenschaften unter einem vorbestimmten Schwellenwert liegt, Validieren der ersten Anforderung.

13. Datenverarbeitungsvorrichtung nach Anspruch 8, wobei die integrierte Schaltung ein Konfigurationsregister (226) aufweist, das eine Anzahl von ersten Anforderungen (738), die von der zentralen Verarbeitungseinheit empfangen wurden, verwaltet.

14. Datenverarbeitungsvorrichtung nach Anspruch 13, wobei die integrierte Schaltung ferner konfiguriert ist zum: Bestimmen, ob die Anzahl der ersten Anforderungen (738) eine vorbestimmte Beziehung zu einem vorbestimmten Schwellenwert hat; in Reaktion auf eine Bestimmung, dass die Anzahl der ersten Anforderungen die vorbestimmte Beziehung zu dem vorbestimmten Schwellenwert hat, Validieren der ersten Anforderung; und in Reaktion auf eine Bestimmung, dass die Anzahl der ersten Anforderungen nicht die vorbestimmte Beziehung zu dem vorbestimmten Schwellenwert hat, Ablehnen der ersten Anforderung.

15. Verfahren, das von einer integrierten Schaltung einer Datenverarbeitungsvorrichtung implementiert wird, umfassend: Validieren (302) einer ersten Anforderung nach erhöhten Benutzerprivilegien in Bezug auf eine netzwerkbasierte Ressource, wobei die erste Anforderung von einer kommunikativ mit der integrierten Schaltung gekoppelten zentralen Verarbeitungseinheit empfangen wird; Bereitstellen (304) einer zweiten Anforderung nach den erhöhten Privilegien an einen netzwerkbasierten Dienst; Empfangen (306) einer Antwort von dem netzwerkbasierten Dienst, wobei die Antwort anzeigt, dass die zweite Anforderung nach erhöhten Anmeldeinformationen gewährt wird und einen privaten Schlüssel aufweist; digitales Signieren (310) einer dritten Anforderung, um auf die netzwerkbasierte Ressource gemäß den erhöhten Privilegien zuzugreifen, unter Verwendung des privaten Schlüssels; und Bereitstellen (312) der digital signierten Anforderung an den netzwerkbasierten Dienst, um auf die netzwerkbasierte Ressource zuzugreifen.

## Revendications

1. Procédé mis en œuvre par un circuit intégré (114, 214) d'un dispositif informatique, comprenant : la validation (302) d'une première demande (238) de privilèges utilisateur élevés par rapport à une ressource basée sur le réseau, la première demande étant reçue en provenance d'une unité centrale de traitement (112, 222) en communication avec le circuit intégré (114) ;
la fourniture (304) d'une deuxième demande (246) de privilèges élevés à un service (208) basé sur le réseau ;
la réception (306) d'une réponse en provenance du service basé sur le réseau, la réponse indiquant que la deuxième demande (246) d'informations d'identification élevées est accordée ;
la récupération (308), en réponse à la réception de la réponse, d'une clé privée (224) stockée dans une mémoire en communication avec le circuit intégré ;
la signature (310) numérique d'une troisième demande (256), pour accéder à la ressource basée sur le réseau conformément aux privilèges élevés, à l'aide de la clé privée récupérée ; et
la fourniture (312) de la demande signée numériquement au service basé sur le réseau pour accéder à la ressource basée sur le réseau.

2. Procédé selon la revendication 1, dans lequel ladite validation comprend : la demande (402) à un utilisateur de fournir des informations d'identification ; la validation (404) des informations d'identification fournies ; et la validation (406), en réponse à la validation des informations d'identification fournies, de la première demande.

3. Procédé selon la revendication 2, dans lequel les informations d'identification comprennent les éléments suivants : des informations biométriques et/ou des informations environnementales et/ou un code d'accès et/ou un nom d'utilisateur et/ou un mot de passe.

4. Procédé selon la revendication 2, dans lequel la deuxième demande (246) comprend les éléments suivants : un identifiant du dispositif informatique (204) et/ou les informations d'identification fournies et/ou un identifiant de la ressource basée sur le réseau et/ou des caractéristiques de tension du dispositif informatique et/ou des caractéristiques de température du dispositif informatique et/ou un emplacement du dispositif informatique.

5. Procédé selon la revendication 1, dans lequel ladite validation comprend : la détermination (502) d'un emplacement dans lequel est situé le dispositif informatique (204) ; la détermination (504) des caractéristiques de tension et/ou des caractéristiques de température associées au dispositif informatique ; la détermination (506) du fait que l'emplacement est l'un parmi une pluralité d'emplacements prédéterminés; la détermination (508) du fait que les caractéristiques de tension sont inférieures à un seuil prédéterminé et/ou que les caractéristiques de température sont inférieures à un seuil prédéterminé ; et la validation (510), en réponse à la détermination du fait que l'emplacement est l'un parmi la pluralité d'emplacements prédéterminés et à la détermination du fait que les caractéristiques de tension sont inférieures à un seuil prédéterminé ou les caractéristiques de température sont inférieures à un seuil prédéterminé, de la première demande.

6. Procédé selon la revendication 1, dans lequel le circuit intégré (214) comprend un registre de configuration (226), lequel conserve un nombre de premières demandes (238) reçues en provenance de l'unité centrale de traitement (222).

7. Procédé selon la revendication 6, dans lequel ladite validation comprend en outre : la détermination (602) si le nombre de premières demandes (238) présente une relation prédéterminée avec un seuil prédéterminé ; la validation (606), en réponse à la détermination du fait que le nombre de premières demandes présente la relation prédéterminée avec le seuil prédéterminé, de la première demande ; et le refus (604), en réponse à la détermination du fait que le nombre de premières demandes (238) ne présente pas la relation prédéterminée avec le seuil prédéterminé, de la première demande.

8. Dispositif informatique comprenant : au moins un circuit de processeur; un circuit intégré (714) en communication avec l'au moins un circuit de processeur (712) ; et une mémoire en communication avec le circuit intégré, laquelle stocke une clé privée, le circuit intégré étant configuré : pour valider (802) une première demande (738) de privilèges utilisateur élevés par rapport à une ressource basée sur le réseau, la première demande étant reçue en provenance de l'au moins un circuit de processeur ; pour fournir (804) une deuxième demande (746) de privilèges élevés à un service basé sur le réseau ; pour recevoir (806) une réponse du service basé sur le réseau, la réponse indiquant que la deuxième demande d'informations d'identité élevées est accordée ; pour récupérer, en réponse à la réception de la réponse, la clé privée à partir de la mémoire ; pour signer (808) numériquement une troisième demande, pour accéder à la ressource basée sur le réseau conformément aux privilèges élevés, à l'aide de la clé privée récupérée ; et pour fournir (810) la demande signée numériquement au service basé sur le réseau pour accéder à la ressource basée sur le réseau.

9. Dispositif informatique selon la revendication 8, dans lequel le circuit intégré (714) est en outre configuré : pour demander à un utilisateur de fournir des informations d'identification ; pour valider les informations d'identification fournies ; et pour valider, en réponse à la validation des informations d'identification fournies, la première demande.

10. Dispositif informatique selon la revendication 9, dans lequel les informations d'identification comprennent les éléments suivants : des informations biométriques et/ou des informations environnementales et/ou un code d'accès et/ou un nom d'utilisateur et/ou un mot de passe.

11. Dispositif informatique selon la revendication 9, dans lequel la deuxième demande (746) comprend les éléments suivants : un identifiant du dispositif informatique et/ou les informations d'identification fournies et/ou un identifiant de la ressource basée sur le réseau et/ou des caractéristiques de tension du dispositif informatique et/ou des caractéristiques de température du dispositif informatique et/ou un emplacement du dispositif informatique.

12. Dispositif informatique selon la revendication 8, dans lequel le circuit intégré (714) est en outre configuré : pour déterminer un emplacement dans lequel est situé le dispositif informatique ; pour déterminer des caractéristiques de tension et/ou des caractéristiques de température associées au dispositif informatique ; pour déterminer le fait que l'emplacement est l'un parmi une pluralité d'emplacements prédéterminés ; pour déterminer le fait que les caractéristiques de tension et/ou les caractéristiques de température sont inférieures à un seuil prédéterminé ; et pour valider, en réponse à la détermination du fait que l'emplacement est l'un parmi la pluralité d'emplacements prédéterminés et à la détermination du fait que les caractéristiques de tension et/ou les caractéristiques de température sont inférieures à un seuil prédéterminé, la première demande.

13. Dispositif informatique selon la revendication 8, dans lequel le circuit intégré comprend un registre de configuration (226), lequel conserve un nombre de premières demandes (738) reçues en provenance de l'unité centrale de traitement.

14. Dispositif informatique selon la revendication 13, dans lequel le circuit intégré est en outre configuré : pour déterminer si le nombre de premières demandes (738) présente une relation prédéterminée avec un seuil prédéterminé ; pour valider, en réponse à la détermination du fait que le nombre de premières demandes présente la relation prédéterminée avec le seuil prédéterminé, la première demande ; et pour refuser, en réponse à une détermination du fait que le nombre de premières demandes ne présente pas la relation prédéterminée avec le seuil prédéterminé, la première demande.

15. Procédé mis en œuvre par un circuit intégré d'un dispositif informatique, comprenant : la validation (302) d'une première demande de privilèges utilisateur élevés par rapport à une ressource basée sur le réseau, la première demande étant reçue en provenance d'une unité centrale de traitement en communication avec le circuit intégré ; la fourniture (304) d'une deuxième demande de privilèges élevés à un service basé sur le réseau ; la réception (306) d'une réponse du service basé sur le réseau, la réponse indiquant le fait que la deuxième demande d'informations d'identité élevées est accordée et comprenant une clé privée ; la signature (310) numérique d'une troisième demande, pour accéder à la ressource basée sur le réseau conformément aux privilèges élevés, à l'aide de la clé privée ; et la fourniture (312) de la demande signée numériquement au service basé sur le réseau pour accéder à la ressource basée sur le réseau.
